(19) Europäisches Patentamt / European Patent Office / Office européen des brevets

(11) **EP 4 443 196 A1**

(12) **EUROPÄISCHE PATENTANMELDUNG**

(43) Veröffentlichungstag:
**09.10.2024   Patentblatt 2024/41**

(21) Anmeldenummer: 23166738.7

(22) Anmeldetag: **05.04.2023**

(51) Internationale Patentklassifikation (IPC):
**G01S 17/89** (2020.01)     **G01S 7/288** (2006.01)
**G01S 17/08** (2006.01)      **G01B 9/02** (2022.01)

(52) Gemeinsame Patentklassifikation (CPC):
**G01S 17/89; G01S 7/4818; G01S 17/08; G01S 17/42**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Baden-Württemberg Stiftung gGmbH 70174 Stuttgart (DE)**

(72) Erfinder:
• **Claus, Daniel**
  **89257 Illertissen (DE)**

• **Alekseenko, Igor**
  **89231 Neu-Ulm (DE)**
• **Hausladen, Florian**
  **89134 Blaustein (DE)**
• **Glöckler, Felix**
  **89077 Ulm (DE)**
• **Pedrini, Giancarlo**
  **70197 Stuttgart (DE)**
• **Gröger, Alexander**
  **70190 Stuttgart (DE)**

(74) Vertreter: **Müller-Boré & Partner Patentanwälte PartG mbB Friedenheimer Brücke 21 80639 München (DE)**

(54) **VORRICHTUNG UND VERFAHREN ZUR DETEKTION ZUMINDEST EINES OBJEKTS UND/ODER ZUR ERMITTLUNG ZUMINDEST EINES OBJEKTABSTANDS**

(57)     Die Erfindung betrifft eine Messvorrichtung (100) und ein Verfahren zur Detektion zumindest eines Objekts (3) und/oder zur Ermittlung zumindest eines Objektabstands, insbesondere für die Verwendung im Straßenverkehr, umfassend:

- eine Lichtquelle (10) zum Aussenden von Licht mit einer vorbestimmten Kohärenzlänge;
- einen Strahlteiler (20) zum Aufteilen des von der Lichtquelle (10) ausgesandten Lichts in einen Messstrahl (12) und einen Referenzstrahl (13);
- eine Referenzstrahltransfereinheit (30), welche den Referenzstrahl (13) in eine Vielzahl von Sub-Referenzstrahlen (15) überführt;
- eine Bilddatenerfassungseinheit (40) zum Erfassen von Bilddaten, welche sich durch eine Überlagerung oder Interferenz der Sub-Referenzstrahlen (15) mit einem Objektstrahl (18) ergeben, wobei der Objektstrahl (18) zumindest einen Teil des Messstrahls (12), welcher von dem zumindest einen Objekt (3) gestreut oder reflektiert wurde, umfasst; und
- eine Auswerteeinheit (50) zum Auswerten der von der Bilddatenerfassungseinheit (40) erfassten Bilddaten;
wobei die Referenzstrahltransfereinheit (30) eine Vielzahl von räumlich getrennten optischen Pfaden (38), insbesondere optischen Fasern, mit jeweils unterschiedlichen optischen Längen umfasst, entlang derer die Sub-Referenzstrahlen (15) zur Bilddatenerfassungseinheit (40) geführt werden.

Die Faserlängen sind vorzugsweise so aufeinander abgestimmt, dass der optische Längenunterschied jeweils der Kohärenzlänge der verwendeten Lichtquelle entspricht. Die Kohärenzlänge des von der Lichtquelle (10) ausgesandten Lichts liegt vorzugsweise zwischen 1 m und 5 m. Damit kann die Position im Raum von sich bewegenden Objekten oder ortsfesten Hindernissen relativ zueinander bestimmt werden, insbesondere durch eine Rekonstruktion mittels digitaler Holographie und unter Verwendung des Prinzips der optischen Kohärenztomographie, OCT.

Fig. 3

EP 4 443 196 A1

**Beschreibung**

Die Erfindung betrifft eine Vorrichtung und ein Verfahren zur Detektion zumindest eines Objekts und/oder zur Ermittlung zumindest eines Objektabstands, insbesondere für die Verwendung im Straßenverkehr. Ferner betrifft die Erfindung ein Fahrzeug, welches die erfindungsgemäße Vorrichtung aufweist.

Insbesondere im Straßenverkehr spielt die automatische Erkennung von Hindernissen und/oder anderen Verkehrsteilnehmern mit Hilfe der maschinellen Bildverarbeitung eine immer wichtigere Rolle. So sind verlässliche Sensorsysteme gerade für autonome Fahrzeuge, vornehmlich Automobile, essenziell. Die Genauigkeit und Verlässlichkeit solcher Sensorsysteme hängt jedoch stark von Umgebungseinflüssen wie z.B. den Wetterbedingungen ab. Bei schlechten Sichtverhältnissen, wie sie z.B. bei Regen, Schneefall und/oder Nebel vorherrschen, kann die Genauigkeit und/oder Verlässlichkeit von solchen Sensorsystemen stark abnehmen oder im schlimmsten Fall überhaupt nicht mehr vorhanden sein. Aber nicht nur der wetterbedingte Einfluss Umgebung, sondern auch Störeinflüsse durch andere Verkehrsteilnehmer, insbesondere durch deren Sensorik, welche beispielsweise auf Methoden wie TOF ("Time-of-flight") oder Lidar ("Light imaging, detection and ranging") basieren, können sich negativ auf Sensorsysteme auswirken. Dies betrifft vor allem herkömmliche Sensorsysteme, die auf der Auswertung von amplituden- und/oder frequenzmodulierten Signalen basieren.

Es ist daher eine Aufgabe der vorliegenden Erfindung, eine Vorrichtung und ein Verfahren bereitzustellen, welches die Detektion zumindest eines Objekts und/oder die Ermittlung zumindest eines Objektabstands, insbesondere im Straßenverkehr, verbessert. Ferner ist es eine Aufgabe der vorliegenden Erfindung, ein Fahrzeug mit einer erhöhten Sicherheit und/oder einem verbesserten Komfort bereitzustellen.

Diese Aufgabe wird durch die Gegenstände der nebengeordneten Ansprüche gelöst. Vorteilhafte Ausführungsformen sind Gegenstand der Unteransprüche.

Ein erster unabhängiger Aspekt zur Lösung der Aufgabe betrifft eine Messvorrichtung zur Detektion zumindest eines Objekts und/oder zur Ermittlung zumindest eines Objektabstands, insbesondere für die Verwendung im Straßenverkehr, umfassend:

- eine Lichtquelle zum Aussenden von Licht mit einer vorbestimmten Kohärenzlänge;
- einen Strahlteiler zum Aufteilen des von der Lichtquelle ausgesandten Lichts in einen Messstrahl und einen Referenzstrahl;
- eine Referenzstrahltransfereinheit, welche ausgelegt ist, den Referenzstrahl in eine Vielzahl von Sub-Referenzstrahlen zu überführen;
- eine Bilddatenerfassungseinheit zum Erfassen von Bilddaten, welche sich durch eine Überlagerung der Sub-Referenzstrahlen mit einem Objektstrahl ergeben, wobei der Objektstrahl zumindest einen Teil des Messstrahls, welcher von dem zumindest einen Objekt gestreut und/oder reflektiert wurde, umfasst; und
- eine Auswerteeinheit zum Auswerten der von der Bilddatenerfassungseinheit erfassten Bilddaten;

wobei die Referenzstrahltransfereinheit eine Vielzahl von räumlich getrennten optischen Pfaden mit jeweils unterschiedlichen optischen Längen umfasst, entlang derer die Sub-Referenzstrahlen zur Bilddatenerfassungseinheit geführt werden.

Unter einer "Detektion zumindest eines Objekts" wird im Rahmen der vorliegenden Erfindung insbesondere verstanden, dass das Vorhandensein eines oder mehrerer Objekte, insbesondere in der Umgebung der Messvorrichtung bzw. in der Umgebung eines Fahrzeugs, welches die Messvorrichtung aufweist, erkannt und/oder registriert wird. In einigen Ausführungsformen kann die "Detektion bzw. Erkennung zumindest eines Objekts" auch bedeuten, dass Formen und/oder Konturen eines oder mehrerer Objekte erkannt werden, und/oder dass erkannt wird, um welches Objekt oder um welche Objekte es sich handelt. Mit anderen Worten kann unter einer "Detektion zumindest eines Objekts" insbesondere auch ein Identifizieren eines oder mehrerer Objekte verstanden werden.

Unter einem "Objekt" wird im Rahmen der vorliegenden Erfindung insbesondere ein Objekt verstanden, welches im Straßenverkehr oder im Baustellenbetrieb ein Hindernis oder eine potenzielle Gefahr darstellt. Das Objekt kann somit z.B. ein Hindernis oder ein Teilnehmer im Straßenverkehr sein. Beispielsweise kann das Objekt eine Baustelle, eine Straßensperre, ein ungewollter Gegenstand auf der Fahrbahn oder dem Gelände, ein Baum, ein Haus, oder ein Fahrzeug (z.B. PKW, LKW, Motorrad, Roller, Fahrrad, Bau- oder Baustellenfahrzeug, Anhänger), etc., sein. Bei dem Fahrzeug kann es sich z.B. um ein liegengebliebenes Fahrzeug oder um ein sich bewegendes Fahrzeug (insbesondere ein vorausfahrendes Fahrzeug) handeln. Genauso gut kann das Objekt aber auch ein Tier oder eine Person (z.B. ein Fußgänger oder Radfahrer) sein. Das Objekt kann statisch sein (d.h. sich in Ruhe befinden) oder dynamisch sein (d.h. sich bewegen).

Unter einem "Objektabstand" wird insbesondere der Abstand eines Objekts zur Messvorrichtung, insbesondere zur Detektionseinheit bzw. Bilderfassungseinheit der Messvorrichtung, verstanden. Es versteht sich, dass sich der "Objektabstand" aber grundsätzlich auch auf einen Abstand des Objekts relativ zu einem beliebigen Gegenstand, welcher zur Messvorrichtung bzw. zu dessen Bilddatenerfassungseinheit einen festen und definierten Abstand aufweist, beziehen kann. So kann sich der Objektabstand z.B. auf ein bestimmtes Teil eines Fahrzeugs (welches die Messvorrichtung aufweist bzw. in welchem die Messvorrichtung verbaut ist), wie z.B. eine Stoßstange des Fahrzeugs, beziehen.

Bei der Lichtquelle handelt es sich vorzugsweise um einen oder mehrere Laser. Die Lichtquelle wird vorzugsweise so ausgelegt, dass die vorbestimmte Kohärenzlänge in etwa der Länge eines Fahrzeugs (z.B. Automobil), in dem die Messvorrichtung verbaut ist, entspricht. Beispielsweise kann die Kohärenzlänge im Bereich von 1 bis 5 Meter liegen.

Unter einem "Messstrahl" wird ein Lichtstrahl bzw. Lichtbündel verstanden, welcher/welches vorgesehen ist, auf das zumindest eine Objekt zu treffen und von diesem gestreut und/oder reflektiert zu werden. Unter einem "Referenzstrahl" wird ein Lichtstrahl bzw. Lichtbündel verstanden, welcher/welches vorgesehen ist, mit zumindest einem Teil des gestreuten und/oder reflektierten Messstrahls (Objektstrahl) zu interferieren. Der Referenzstrahl trifft somit nicht auf das zumindest eine Objekt. Unter einem "Sub-Referenzstrahl" wird ein Lichtstrahl bzw. Lichtbündel verstanden, welcher/welches auf dem Referenzstrahl basiert bzw. aus dem Referenzstrahl hervorgeht. Insbesondere stellt jeder Sub-Referenzstrahl einen bestimmten Teil des Referenzstrahls in Form eines Pulses dar. Insbesondere entspricht jeder Sub-Referenzstrahl dem Referenzstrahl mit einer zeitlich begrenzten Dauer. Die Sub-Referenzstrahlen werden zudem durch die Referenzstrahltransfereinheit auf unterschiedlichen Pfaden gelenkt bzw. geführt und somit räumlich voneinander getrennt. Die Sub-Referenzstrahlen können daher auch als (individuelle) Referenzstrahlpulse bezeichnet werden.

Die "Referenzstrahltransfereinheit" umfasst oder ist insbesondere ein (schnell) schaltbares lichtführendes System. Durch das "Schalten" der Referenzstrahltransfereinheit, welches z.B. mit Hilfe eines Galvo-Scanners erfolgt, kann der Referenzstrahl zeitlich zerlegt und in die Sub-Referenzstrahlen überführt werden. Die Sub-Referenzstrahlen bzw. Referenzstrahlpulse können in unterschiedliche Kanäle (insbesondere optische Fasern oder Lichtwellenleiter) der Referenzstrahltransfereinheit eingekoppelt werden. Nach Durchlaufen einer bestimmten, individuellen optischen Weglänge werden die Sub-Referenzstrahlen bzw. die individuellen Referenzstrahlpulse wieder aus der Referenzstrahltransfereinheit ausgekoppelt.

Die räumlich getrennten "optischen Pfade" werden im Rahmen der Erfindung auch als "Referenzkanäle" bezeichnet. Die Referenzkanäle weisen jeweils eine unterschiedliche optische Länge auf. Dabei wird unter der "optischen Länge" die geometrische Länge multipliziert mit dem Brechungsindex des Materials, in dem die Strahlen geführt werden, bei der Wellenlänge der Lichtquelle verstanden. Entlang der einzelnen optischen Pfade bzw. Referenzkanäle werden die Sub-Referenzstrahlen bzw. individuellen Referenzstrahlpulse zur Bilddatenerfassungseinheit geführt. Mit anderen Worten ist die Referenzstrahltransfereinheit ausgelegt, die Sub-Referenzstrahlen mit Hilfe von räumlich getrennten optischen Pfaden zur Bilddatenerfassungseinheit zu führen, und zwar derart, dass die Sub-Referenzstrahlen bis zu ihrer Detektion an der Bilddatenerfassungseinheit unterschiedliche optische Weglängen durchlaufen.

Die "Bilddatenerfassungseinheit" umfasst oder ist insbesondere eine Detektionseinheit, welche ausgelegt ist, die Sub-Referenzstrahlen und den Objektstrahl zu detektieren. Die von der Bilddatenerfassungseinheit erfassten Bilddaten beinhalten eine Überlagerung der Sub-Referenzstrahlen mit dem Objektstrahl. Insbesondere umfassen die von der Bilddatenerfassungseinheit erfassten Bilddaten interferometrische Daten und/oder holografische Daten. Mit anderen Worten ist die Bilddatenerfassungseinheit insbesondere ausgelegt, ein Interferenzbild und/oder ein holografisches Bild aufzunehmen. Die von der Bilddatenerfassungseinheit erfassten Bilddaten entsprechen somit insbesondere einem aufgenommenen Interferenzbild und/oder einem aufgenommenen Hologramm. Insbesondere umfasst die Bilddatenerfassungseinheit einen Lichtdetektor bzw. einen Lichtsensor (z.B. einen CCD-Sensor oder einen CMOS-Sensor). Vorzugsweise umfasst oder ist die Bilddatenerfassungseinheit eine Kamera, insbesondere eine CCD-Kamera.

Die "Auswerteeinheit" ist ausgelegt, die von der Bilderfassungseinheit erfassten Bilddaten, insbesondere ein oder mehrere von der Bilderfassungseinheit aufgenommene Interferenzbilder und/oder holografische Bilder, auszuwerten. Vorzugsweise umfasst die Auswerteeinheit einen Prozessor bzw. Mikroprozessor, mit dem Rechenoperationen durchgeführt werden können. Zudem umfasst die "Auswerteeinheit" vorzugsweise einen oder mehrere Datenspeicher. Insbesondere kann die Auswerteeinheit einen Computer umfassen. Ferner kann die Auswerteeinheit ein durch einen Computer lesbares Speichermedium umfassen, welches einen Code darauf gespeichert aufweist, wobei der Code, wenn er durch einen Prozessor ausgeführt wird, bewirkt, dass der Prozessor erfindungsgemäße Schritte ausführt. Insbesondere kann die Auswerteeinheit durch geeignet konfigurierte bzw. programmierte Datenverarbeitungsvorrichtungen (insbesondere spezialisierte Hardwaremodule, Computer oder Computersysteme, wie z.B. Rechner- oder Datenwolken) mit entsprechenden Recheneinheiten, elektronischen Schnittstellen, Speicher und/oder Datenübermittlungseinheiten realisiert werden. Die Auswerteeinheit kann ferner zumindest eine, vorzugsweise interaktive, grafische Benutzerschnittstelle (GUI) umfassen, welche es einem Benutzer ermöglicht, Daten zu betrachten und/oder einzugeben und/oder zu modifizieren. Die Auswerteeinheit kann ferner geeignete Schnittstellen aufweisen, die eine Übermittlung, Eingabe und/oder ein Auslesen von Daten (z.B. Abstandsdaten und/oder Konturdaten von detektierten Objekten) ermöglichen.

Mit Hilfe der vorliegenden Erfindung können die Mängel bisheriger automatischer Systeme zur Detektion bzw. Erkennung von Objekten (wie z.B. Hindernisse und/oder weitere Verkehrsteilnehmer) im Straßenverkehr, welche sich vor allem bei schlechten Sichtverhältnissen (wie z.B. bei Nebel, Regen und/oder Schneefall) bemerkbar machen, reduziert werden. Im Vergleich zu bisher bekannten Systemen zur Objekterkennung und/oder Abstandsmessung im Straßenverkehr, welche in erster Linie auf der Auswertung von amplituden- und/oder frequenzmodulierten Signalen basieren, wird erfindungsgemäß durch die Detektion und Auswertung von Objekt- und Referenzstrahlen bzw. deren Überlagerung vielmehr ein interferometrischer Ansatz verfolgt. Auf diese Weise kann nicht nur der wetterbedingte Einfluss, sondern auch der Störeinfluss anderer Verkehrsteilnehmer (insbesondere durch deren Sensorik) minimiert werden. Dies liegt insbesondere daran, dass die anderen Verkehrsteilnehmer eine andere Lichtquelle verwenden, deren Licht nicht mit dem von der Lichtquelle der erfindungsgemäßen Vorrichtung ausgesandten Licht kohärent ist. Da Licht grundsätzlich nur mit sich selbst interferieren kann, erhöht das Störlicht anderer Verkehrsteilnehmer lediglich den Gleichanteil, trägt aber nicht zum interferometrischen Nutzsignal bei.

Dadurch, dass das verwendete Licht erfindungsgemäß eine vorbestimmte Kohärenzlänge aufweist, erfolgt zudem eine Streuungsunterdrückung, welche sich vor allem bei schlechten Sichtverhältnissen (wie z.B. bei Regen, Nebel und/oder Schneefall) positiv auf die Genauigkeit und Zuverlässigkeit der Detektion eines Objekts und/oder der Abstandsmessung auswirkt. Das liegt insbesondere daran, dass aufgrund der vorbestimmten Kohärenzlänge (z.B. von wenigen Metern) der interferenzfähige Messbereich auf die Hälfte der Kohärenzlänge begrenzt wird. Wenn die Pfadlängen nicht angepasst sind, wie es bei Streupartikel vor und nach dem interferenzfähigen Messbereich der Fall ist, wird das an den Streupartikeln gestreute Licht nicht interferometrisch registriert und kann somit z.B. bei einer holographischen Rekonstruktion unterdrückt werden.

Dass sich erfindungsgemäß bei schlechten Sichtverhältnissen eine höhere Genauigkeit und/oder Zuverlässigkeit ergibt, liegt insbesondere auch daran, dass das z.B. von Regentropfen oder Nebelpartikel zurückgestreute Licht mit einem Referenzstrahl viel weniger interferiert als z.B. das von einem vorausfahrenden Fahrzeug oder einem Hindernis zurückgestreute Licht. Da der Regen und/oder Nebeltropfen transparent ist und somit das Licht nicht nur streut, sondern auch transmittiert, ist der Einfluss des von den Regentropfen und/oder Nebelpartikel gestreuten Lichtes, selbst wenn sich die Regentropfen und/oder Nebelpartikel im interferenzfähigen Messbereich befinden, vernachlässigbar gering. Darüber hinaus weisen die Regentropfen und/oder Nebelpartikel im Vergleich zu einem Hindernis oder einem vorausfahrenden Fahrzeug eine viel geringere Streu- und/oder Reflexionsfläche auf, so dass der Anteil an rückgestreutem bzw. rückreflektiertem Licht entsprechend geringer ist als es z.B. bei einem Hindernis oder einem vorausfahrenden Fahrzeug der Fall ist. Des Weiteren können Bildverarbeitungsroutinen vorteilhafterweise darauf eingelernt werden, dass sie eine Szene mit z.B. Regen-, Nebel, und/oder Schneepartikeln von einer Szene mit klaren Objektkanten unterscheiden (z.B. unter Verwendung eines Kantenfilters).

Aufgrund der Überlagerung bzw. Interferenz des Objektstrahls mit dem Referenzstrahl bzw. den Sub-Referenzstrahlen wird das vom Objekt gestreute Licht verstärkt (interferometrische Verstärkung). Somit ist erfindungsgemäß für die Ausleuchtung des Messvolumens nur verhältnismäßig wenig Licht notwendig. Dies hat im Vergleich zu anderen Messmethoden, welche eine höhere Lichtstärke benötigen, den Vorteil, dass die Streuung weit weniger problematisch ist. Zudem können Augen- und/oder Hautsicherheitsvorschriften, welche insbesondere bei der Verwendung von Lasern relevant sind, einfacher eingehalten werden.

Die erfindungsgemäße Messvorrichtung kann grundsätzlich für Fahrzeuge aller Art verwendet werden. So kann die erfindungsgemäße Messvorrichtung z.B. für gewöhnliche Automobile verwendet werden, aber auch in spezielleren Bereichen wie z.B. in der Baubranche und/oder im Rettungsdienst eingesetzt werden. Beispielsweise kann die erfindungsgemäße Messvorrichtung gerade für vollautomatisierte Baufahrzeuge (wie Bagger) oder für eine vollautomatisierte Personen-Suche und/oder für eine vollautomatisierte Rettungsaktion vorteilhaft sein. Denn in solchen speziellen Anwendungsbereichen kann es nicht nur wetterbedingt, sondern z.B. auch aufgrund einer starken Staub- und/oder Rauchentwicklung (z.B. bei Feuer) zu verschlechterten Sichtbedingungen kommen.

In einer bevorzugten Ausführungsform weist die Referenzstrahltransfereinheit N optische Pfade auf, wobei sich für alle $n \in \{2, 3, 4, ..., N\}$ die optische Länge eines n-ten optischen Pfads von der optischen Länge eines (n-1)-ten optischen Pfads um die vorbestimmte Kohärenzlänge unterscheidet. Mit anderen Worten unterscheiden sich die optischen Längen von jeweils zwei bezüglich einer Durchnummerierung aufeinanderfolgenden optischen Pfaden um die vorbestimmte Kohärenzlänge des von der Lichtquelle ausgesandten Lichts. Beispielsweise unterscheidet sich die optische Länge eines zweiten optischen Pfads von der optischen Länge eines ersten optischen Pfads um die vorbestimmte Kohärenzlänge. Entsprechend unterscheidet sich die optische Länge eines dritten optischen Pfads von der optischen Länge des zweiten optischen Pfads um die vorbestimmte Kohärenzlänge. Entsprechend unterscheidet sich die optische Länge eines vierten optischen Pfads von der optischen Länge des dritten optischen Pfads um die vorbestimmte Kohärenzlänge, usw. Die optischen Längen von beliebigen zwei der Vielzahl von optischen Pfaden unterscheiden sich somit vorzugsweise um die vorbestimmte Kohärenzlänge oder um ein ganzzahliges Vielfaches der vorbestimmten Kohärenzlänge. Mit anderen Worten ist die Referenzstrahltransfereinheit derart ausgelegt, dass sich die von den Sub-Referenzstrahlen zurückgelegten optischen Weglängen um die vorbestimmte Kohärenzlänge des von der Lichtquelle ausgesandten Lichts oder um ein Vielfaches der vorbestimmten Kohärenzlänge unterscheiden.

In einer weiteren bevorzugten Ausführungsform umfasst die Vielzahl von optischen Pfaden der Referenzstrahltransfereinheit eine Vielzahl von optischen Fasern und/oder Lichtwellenleitern (englisch "waveguides"). Insbesondere sind die optischen Pfade der Referenzstrahltransfereinheit optische Fasern und/oder Lichtwellenleiter.

In einer weiteren bevorzugten Ausführungsform umfasst die Vielzahl von optischen Pfaden eine Vielzahl von optischen Fasern, wobei die Referenzstrahltransfereinheit eine Scanoptik umfasst, mit welcher der Referenzstrahl nacheinander in die optischen Fasern eingekoppelt werden kann. Insbesondere kann die Scanoptik einen Galvoscanner mit Scan-Linse, einen MEMS-Spiegel mit Scan-Linse und/oder einen Polygonspiegel umfassen. Insbesondere kann die Scanoptik ein Galvoscanner mit Scan-Linse, ein MEMS-Spiegel mit Scan-Linse oder ein Polygonspiegel sein.

Alternativ oder zusätzlich umfasst die Vielzahl von optischen Pfaden eine Vielzahl von Lichtwellenleitern, wobei die Referenzstrahltransfereinheit ein Waveguide-System umfasst, mit dem unter Ausnutzung von thermischen Effekten der Referenzstrahl nacheinander in eine Vielzahl von Lichtwellenleitern ("Waveguides") eingekoppelt werden kann. Die Waveguides besitzen vorzugsweise unterschiedliche auf die Applikation und Kohärenzlänge der Lichtquelle angepasste Längen. Eine Auskopplungsseite des Waveguide-Systems weist vorzugsweise mehrere Auskopplungskanäle auf, die in einer vorzugsweise hexagonalen 2D Anordnung angeordnet sind. Das Waveguide-System kann beispielsweise mittels einer zwei-Photonen Polymerisation hergestellt werden. Mit Hilfe eines solchen Waveguide-Systems, welches nach dem Prinzip eines thermo-optischen Schalters (kurz: TOS) funktioniert, ist es möglich, den Referenzstrahl unter Ausnutzung des thermo-optischen Effekts in die Sub-Referenzstrahlen überzuführen. Ein thermo-optischer Schalter beruht darauf, dass ein Material bei einer Temperaturänderung auch seinen Brechungsindex ändert. Die am besten studierten TOS-Systeme basieren auf Moden-Interferenz und benutzen eine Konfiguration, welche im Prinzip ein Mach-Zehnder-Interferometer darstellt. Hierzu werden zwei Waveguides nahe aneinander geführt, wodurch es zu einem Übersprechen (englisch "crosstalk") kommt, d.h. die in dem einen Waveguide propagierende Mode wird teilweise in den anderen übertragen. Die Waveguides trennen sich nun wieder und durchlaufen Heizelemente, welche durch eine Änderung der Temperatur den Brechungsindex des Materials ändern und damit auch den optischen Weg, den die propagierende Mode zurücklegen muss. Bei erneutem Zusammenführen der Waveguides kommt es nun, abhängig von der Differenz der optischen Weglänge, zu konstruktiver bzw. destruktiver Interferenz. Über eine gezielte Manipulation der Phasendifferenz lässt sich nun bestimmen, in welchem der beiden Waveguides die Mode weiterpropagiert. Weitere Informationen zur Umsetzung eines solchen Waveguide-Systems finden sich in T. Aalto et al.: "Fast thermo-optical switch based on SOI waveguides", Proceedings of SPIE - The International Society for Optical Engineering - 4987, 2003, 10.1117/12.478334.

In einer weiteren bevorzugten Ausführungsform weisen die optischen Pfade bzw. Fasern der Referenzstrahltransfereinheit jeweils einen verspiegelten (bzw. reflektierenden) Endabschnitt auf. Da das Licht an der Spiegelfläche reflektiert wird, durchläuft es zweifach die Faser. Daher sind in diesem Fall die unterschiedlichen optischen Faserlängen vorzugsweise um die Hälfte der Kohärenzlänge aufeinander abgestimmt.

In einer weiteren bevorzugten Ausführungsform umfasst die Referenzstrahltransfereinheit einen mehrkanaligen Faserstecker, in dem die Vielzahl von optischen Fasern zumindest bereichsweise angeordnet ist. Unter einem "Faserstecker" wird insbesondere ein Element für die Behausung und Führung einer Vielzahl von Fasern verstanden.

In einer weiteren bevorzugten Ausführungsform sind die optischen Fasern im Faserstecker derart angeordnet, dass in einer Draufsicht auf den Faserstecker Endabschnitte der optischen Fasern, aus denen die Sub-Referenzstrahlen austreten, auf den Punkten eines zweidimensionalen hexagonalen Gitters liegen. Im Rahmen der Erfindung hat sich herausgestellt, dass mit einer solchen Anordnung eine besonders hohe Genauigkeit bei der Objektdetektion und/oder der Abstandsmessung erreicht werden kann.

In einer weiteren bevorzugten Ausführungsform umfasst die Messvorrichtung eine optische Linse, insbesondere eine Kollimationslinse, welche derart (insbesondere relativ zum Faserstecker bzw. zu einer optischen Achse des Fasersteckers) angeordnet ist, dass die aus der Referenzstrahltransfereinheit (bzw. aus den optischen Fasern und/oder den Lichtwellenleitern) austretenden Sub-Referenzstrahlen auf die optische Linse treffen und von dieser jeweils unter unterschiedlichen Winkeln (im Folgenden auch als "Interferenzwinkeln" bezeichnet) bezüglich einer optischen Achse der Linse abgelenkt werden. Insbesondere sind die optische Achse des Fasersteckers und die optische Achse der Linse versetzt zueinander angeordnet. Auf diese Weise kann die sogenannte "Trägerfrequenzmethode" (siehe weiter unten) realisiert werden.

In einer weiteren bevorzugten Ausführungsform liegt die Kohärenzlänge des von der Lichtquelle ausgesandten Lichts in einem Bereich von 1 m bis 5 m. Dieser Bereich ist z.B. für eine Anwendung der vorliegenden Erfindung im Straßenverkehr und insbesondere beim autonomen Fahren von Vorteil, Es versteht sich, dass jedoch für andere Anwendungen auch ein anderer als der oben genannte Bereich vorteilhaft sein kann. Beispielsweise könnten für mesoskopische Applikationen geringere Kohärenzlängen von Vorteil sein. Es wird ferner angemerkt, dass grundsätzlich auch eine Lichtquelle verwendet werden kann, die eine wesentlich größere Kohärenzlänge aufweist, nämlich dann, wenn lediglich Lichtpulse verwendet werden. Eine Pulsdauer von wenigen Nanosekunden bewirkt z.B. einen interferenzfähigen Bereich von wenigen Metern.

In einer weiteren bevorzugten Ausführungsform ist die Lichtquelle ausgelegt, Licht mit zumindest zwei vorbestimmten unterschiedlichen Wellenlängen auszusenden. Auf diese Weise kann eine Zwei- oder Mehrwellenlängen-Holografie durchgeführt werden. Die zumindest zwei Wellenlängen können z.B. aus zumindest zwei unterschiedlichen Lasern erzeugt werden. Vorteilhaft für die Kompaktheit und die Kosten ist es jedoch, nur eine Lichtquelle zu verwenden. Hierzu kann beispielsweise mit Hilfe eines akustooptischen Modulators durch eine Frequenzänderung eine Änderung der Wellenlänge hervorgerufen werden, so dass die Aufnahme von Hologrammen der zumindest zwei Wellenlängen in zeitlich sequenzieller Reihenfolge erfolgen kann. Alternativ oder zusätzlich kann über eine Änderung der Stromstärke, die an der Lichtquelle bzw. am Laser anliegt, die Wellenlänge eingestellt werden.

In einer weiteren bevorzugten Ausführungsform ist die Auswerteeinheit ausgelegt, ein oder mehrere von der Bilderfassungseinheit aufgenommene Interferenzbilder und/oder ein oder mehrere von der Bilderfassungseinheit aufgenommene (digitale) Hologramme (holografische Bilder), welche sich aus einer Überlagerung des (von der Bilderfassungseinheit detektierten) Objektstrahls mit den (von der Bilderfassungseinheit detektierten) Sub-Referenzstrahlen ergeben, auszuwerten.

In einer weiteren bevorzugten Ausführungsform ist die Auswerteeinheit ausgelegt, aus der Vielzahl von Sub-Referenzstrahlen denjenigen Sub-Referenzstrahl oder diejenigen Sub-Referenzstrahlen zu ermitteln, der/die mit dem Objektstrahl zu einer Interferenz bzw. Interferenzerscheinung bzw. einem Interferenzmuster (insbesondere einer destruktiven und/oder konstruktiven Interferenz) geführt hat/haben. Insbesondere ist die Auswerteeinheit ausgelegt, aus der Vielzahl von Sub-Referenzstrahlen denjenigen Sub-Referenzstrahl oder diejenigen Sub-Referenzstrahlen zu ermitteln, der/die nach einer Fourier-Transformation, vorzugsweise einer Fast-Fourier Transformation (FFT), zu einer im Fourier-Raum auftretenden Beugungsordnung geführt hat/haben. Aus den Längen der zu den ermittelten Sub-Referenzstrahlen zugehörigen optischen Pfade bzw. Referenzkanäle kann dann auf die Abstände zu ruhenden oder sich bewegenden Objekten geschlossen werden.

Alternativ oder zusätzlich ist die Auswerteeinheit vorzugsweise ausgelegt, zumindest einen Objektabstand auf Basis eines Interferenzbildes, welches sich aus einer Überlagerung des (von der Bilderfassungseinheit detektierten) Objektstrahls mit den (von der Bilderfassungseinheit detektierten) Sub-Referenzstrahlen ergibt, zu ermitteln. Vorzugsweise wird hierzu ferner die vorbestimmte Kohärenzlänge berücksichtigt. Unter Berücksichtigung der vorbestimmten Kohärenzlänge kann insbesondere eine mögliche Abweichung des ermittelten Abstands vom tatsächlichen Abstand angegeben werden. Insbesondere entspricht eine mögliche Abweichung des ermittelten Abstands vom tatsächlichen Abstand der Hälfte der vorbestimmten Kohärenzlänge.

Alternativ oder zusätzlich ist die Auswerteeinheit vorzugsweise ausgelegt, eine rechnerische (bzw. numerische) Rekonstruktion eines digitalen Holgramms durchzuführen. Eine rechnerische Rekonstruktion von digitalen Hologrammen umfasst insbesondere die folgenden Schritte:

- Durchführen einer Fourier-Transformation (vorzugsweise unter Verwendung eines Fast Fourier Transform-Algorithmus) des aufgezeichneten digitalen Hologramms;
- Durchführen einer Filterung, um unerwünschte Rekonstruktionen zu entfernen (konjugierte Rekonstruktion, Beugung nullter Ordnung); und
- Durchführen einer inversen Fourier-Transformation (vorzugsweise unter Verwendung eines Fast Fourier Transform-Algorithmus) der gefilterten Daten.

Die Rekonstruktion ermöglicht es insbesondere, Amplitude und Phase einer Objektwellenfront zu erhalten. Da die Amplitude und Phase der rekonstruierten Wellenfront ein Bild der Objekte liefern, ist es vorteilhafterweise möglich, Informationen über die Abmessungen und Positionen der Objekte (wie z.B. Autos, Fußgänger, Tiere, etc.) zu erhalten. Die Phaseninformationen bieten zudem die Möglichkeit einer Bildfokussierung. Da die rechnerische Rekonstruktion von digitalen Hologrammen dem Fachmann grundsätzlich bekannt ist, werden hierzu im Rahmen der vorliegenden Erfindung keine weiteren Ausführungen gemacht.

Alternativ oder zusätzlich ist die Auswerteeinheit vorzugsweise ausgelegt, eine Kontur des zumindest einen Objekts auf Basis eines digitalen Hologramms, welches sich aus einer Überlagerung des (von der Bilderfassungseinheit detektierten) Objektstrahls mit den (von der Bilderfassungseinheit detektierten) Sub-Referenzstrahlen ergibt, zu ermitteln.

Ein weiterer unabhängiger Aspekt zur Lösung der Aufgabe betrifft ein Fahrzeug, welches eine erfindungsgemäße Messvorrichtung aufweist bzw. mit einer erfindungsgemäßen Messvorrichtung ausgestattet ist. Das Fahrzeug kann ein beliebiges Fahrzeug, z.B. ein Automobil (insbesondere ein Personenkraftwagen), ein Motorrad, ein Lastkraftwagen, ein Baufahrzeug, ein Baustellenfahrzeug, ein Rettungsfahrzeug, ein landwirtschaftliches Fahrzeug, etc., sein.

Ein weiterer unabhängiger Aspekt zur Lösung der Aufgabe betrifft ein Verfahren zur Detektion eines Objektes und/oder zur Ermittlung zumindest eines Objektabstands, insbesondere im Straßenverkehr, umfassend die Schritte:

- Bereitstellen einer erfindungsgemäßen Messvorrichtung und/oder eines erfindungsgemäßen Fahrzeugs; und
- Auswerten eines Interferenzbildes und/oder eines digitalen Hologramms (bzw. holografischen Bildes), welches sich aus einer Überlagerung des (von der Bilderfassungseinheit detektierten) Objektstrahls mit den (von der Bilderfassungseinheit detektierten) Sub-Referenzstrahlen ergibt.

In einer bevorzugten Ausführungsform umfasst das Verfahren die folgenden Schritte:

- Durchführen einer Fourier-Transformation, insbesondere einer Fast-Fourier-Transformation (FFT), um die von der Bilddatenerfassungseinheit erfassten Bilddaten (bzw. ein von der Bilderfassungseinheit aufgenommenes Bild) in den Fourier-Raum überzuführen;
- basierend auf dem Ergebnis der durchgeführten Fourier-Transformation, Ermitteln zumindest eines Sub-Referenzstrahls, welcher mit dem Objektstrahl zu einer destruktiven und/oder konstruktiven Interferenz geführt hat;
- Ermitteln der von dem zumindest einen interferierenden Sub-Referenzstrahl zurückgelegten optischen Weglänge durch Identifizieren des zumindest einen optischen Pfads, entlang derer der zumindest eine interferierende Sub-Referenzstrahl zur Bilddatenerfassungseinheit geführt wurde; und
- Ermitteln zumindest eines Objektabstands, insbesondere eines Objektabstandsbereiches, auf Basis der zumindest einen ermittelten optischen Weglänge und vorzugsweise ferner auf Basis der vorbestimmten Kohärenzlänge des von der Lichtquelle ausgesandten Lichts.

Alternativ oder zusätzlich kann der zumindest eine Objektabstand insbesondere auf Basis zumindest einer durch eine Fouriertransformation dargestellten bzw. bestimmten Position im Ortsfrequenzraum ermittelt werden. Dabei kann die Position einem Interferenzwinkel des entsprechenden Referenzstrahls bzw. Sub-Referenzstrahls zugeordnet werden. Der Interferenzwinkel ist durch die Neigung des Referenzstrahls bzw. Sub-Referenzstrahls zum Objektstrahl definiert. Damit beide Strahlen (d.h. der Referenzstrahl bzw. Sub-Referenzstrahl einerseits und der Objektstrahl andererseits) miteinander interferieren können, müssen ihre optischen Weglängen aufeinander angepasst sein. Die optische Weglänge $L_n$ ergibt sich aus der bekannten geometrischen Weglänge $L$ zu $L_n = L*n$, wobei $n$ den Brechungsindex bezeichnet.

Insbesondere kann aus den Längen der zu den ermittelten Sub-Referenzstrahlen zugehörigen optischen Pfade bzw. Referenzkanäle auf die Abstände von (ruhenden oder sich bewegenden) Objekten relativ zur (ruhenden oder sich bewegenden) Messvorrichtung bzw. zur Bilddatenerfassungseinheit der (ruhenden oder sich bewegenden) Messvorrichtung geschlossen werden.

In einer weiteren bevorzugten Ausführungsform umfasst das Verfahren die folgenden Schritte:

- Durchführen einer rechnerischen (bzw. numerischen) Rekonstruktion eines von der Bilddatenerfassungseinheit aufgenommenen digitalen Holgramms; und
- Ermitteln zumindest einer Dimension und/oder zumindest einer Kontur des zumindest einen Objekts auf Basis der durchgeführten Rekonstruktion.

In einer weiteren bevorzugten Ausführungsform ist die Lichtquelle der Messvorrichtung ausgelegt, Licht mit zumindest zwei vorbestimmten unterschiedlichen Wellenlängen auszusenden, wobei zum Ermitteln der zumindest einen Dimension und/oder zumindest einen Kontur des zumindest einen Objekts Methoden der Mehrwellenlängen-Holografie angewendet werden. Im Falle der Verwendung von zwei vorbestimmten Wellenlängen werden insbesondere die Methoden der Zweiwellenlängen-Holografie angewendet.

Es versteht sich, dass die vorstehend genannten und die nachfolgend noch zu erläuternden Merkmale nicht nur in der jeweils angegebenen Kombination, sondern auch in Alleinstellung oder in anderen Kombinationen verwendbar sind, ohne den Rahmen der vorliegenden Erfindung zu verlassen.

Für die oben genannten weiteren unabhängigen Aspekte und insbesondere für diesbezügliche bevorzugte Ausführungsformen gelten auch die vor- oder nachstehend gemachten Ausführungen zu den Ausführungsformen des ersten Aspekts. Insbesondere gelten für einen unabhängigen Aspekt der vorliegenden Erfindung und für diesbezügliche bevorzugte Ausführungsformen auch die vor- und nachstehend gemachten Ausführungen zu den Ausführungsformen der jeweils anderen unabhängigen Aspekte.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereitstellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen, sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann und daher in Erwägung gezogen und auch als von der Beschreibung umfasst angesehen werden soll.

Kurze Beschreibung der Zeichnungen

Figur 1    zeigt eine schematische Skizze zur Veranschaulichung einer beispielhaften Problemstellung der vorliegenden Erfindung;

Figur 2    zeigt eine schematische Skizze zur Veranschaulichung eines Prinzips der vorliegenden Erfindung gemäß einem Beispiel;

Figur 3    zeigt eine schematische Skizze einer Messvorrichtung 100 gemäß einer bevorzugten Ausführungsform der Erfindung;

Figur 4    zeigt eine weitere schematische Skizze einer Messvorrichtung 100 gemäß einer bevorzugten Ausführungsform der Erfindung;

Figur 5    zeigt eine schematische Skizze zur Erzeugung von Sub-Referenzstrahlen gemäß einer beispielhaften Ausführungsform der Erfindung;

Figur 6    zeigt eine schematische Skizze zur Auswertung von erfassten Bilddaten gemäß einer beispielhaften Ausführungsform der Erfindung;

Figur 7    zeigt eine vergrößerte Darstellung eines Ausschnitts von Figur 6 mit weiteren Details;

Figur 8    zeigt eine schematische Skizze zur Veranschaulichung eines Prinzips der vorliegenden Erfindung gemäß einem weiteren Beispiel bzw. einer bevorzugten Ausführungsform;

Figur 9    zeigt eine schematische Skizze einer Messvorrichtung 100 gemäß einer weiteren bevorzugten Ausführungsform der Erfindung;

Figur 10    zeigt eine schematische Skizze einer Messvorrichtung 100 gemäß einer weiteren bevorzugten Ausführungsform der Erfindung.

Detaillierte Beschreibung der Zeichnungen

Im Rahmen der vorliegenden Beschreibung wird ein mit einer Messvorrichtung ausgestattetes Fahrzeug auch kurz als Messfahrzeug bezeichnet. Ein Fahrzeug, welches von einer Messvorrichtung oder dem Messfahrzeug detektiert werden soll, wird auch als Targetfahrzeug oder allgemein als Objekt bezeichnet.

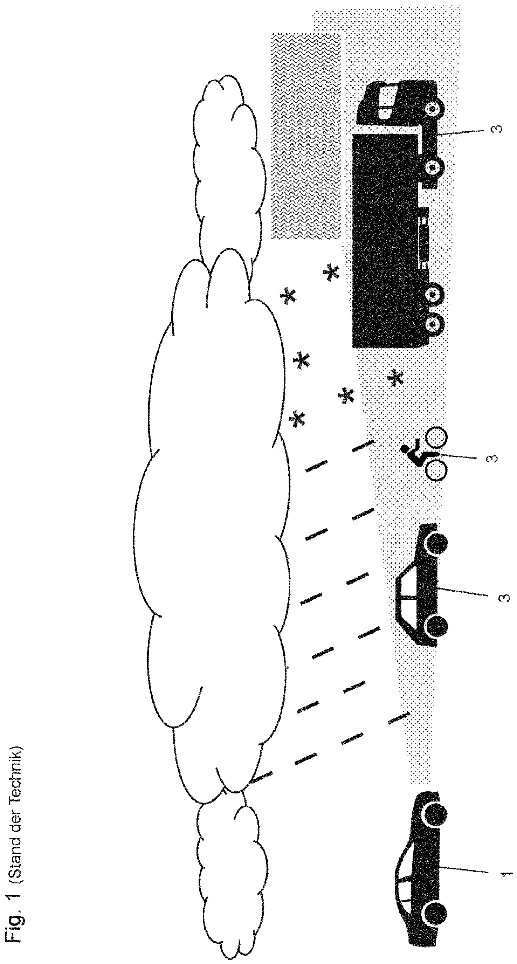

Die **Figur 1** zeigt eine schematische Skizze zur Veranschaulichung einer beispielhaften Problemstellung der vorliegenden Erfindung. Ein Messfahrzeug 1, beispielsweise ein Automobil, soll mit Hilfe einer Messvorrichtung, mit dem das Messfahrzeug 1 ausgestattet ist, ein oder mehrere Targetfahrzeuge bzw. Objekte 3, insbesondere ein oder mehrere vorausfahrende Fahrzeuge (wie z.B. ein weiteres Automobil, einen Radfahrer und/oder einen Lastkraftwagen, wie in der Figur 1 dargestellt) und/oder andere (in der Figur 1 nicht dargestellte) Objekte wie z.B. Hindernisse auf der Straße, selbst bei erschwerten Sichtbedingungen (z.B. bei Niederschlag, Nebel, Rauch, etc.), automatisch detektieren bzw. erkennen und/oder einen Abstand bzw. Abstandsinformationen der detektierten Objekte 3 zum Messfahrzeug 1 ermitteln. Mit anderen Worten soll insbesondere die "Szene" vor dem Messfahrzeug 1 vermessen werden. Vorzugsweise soll die Szene vor dem Messfahrzeug 1 dreidimensional vermessen werden (z.B. in Form einer 2D Abbildung und zusätzlichen Abstandsinformationen).

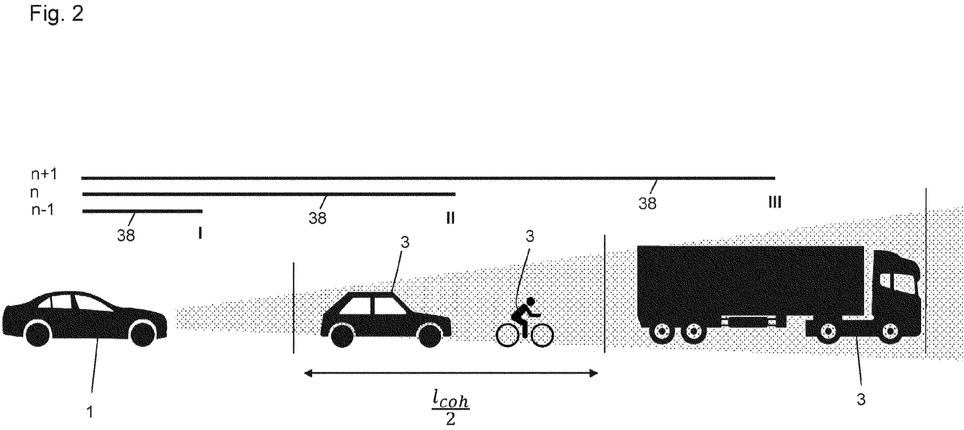

Die **Figur 2** zeigt eine schematische Skizze zur Veranschaulichung des der Erfindung zu Grunde liegenden Prinzips gemäß einem Beispiel. Wie in der Figur 1 sind auch in der Figur 2 wieder ein Messfahrzeug 1 und drei vorausfahrende Targetfahrzeuge 3 dargestellt. Eine dreidimensionale Vermessung der Szene vor dem Messfahrzeug 1 erfolgt dabei mit dem auf "Coherence Gating" basierenden Verfahren der optischen Kohärenztomografie. Wie in der Figur 2 ersichtlich, wird hierzu der Bereich bzw. die Szene vor dem Messfahrzeug 1 in verschiedene Messabschnitte (im dargestellten Beispiel der Figur 2 also Messabschnitt I, Messabschnitt II und Messabschnitt III) aufgeteilt. Jeder Messabschnitt weist vom Messfahrzeug 1 einen unterschiedlichen vordefinierten Abstand auf. Die einzelnen Messabschnitte weisen jeweils eine axiale Ausdehnung auf, die der halben Kohärenzlänge $l_{coh}/2$ einer für die Vermessung eingesetzten Lichtquelle entspricht. Ferner sind in der Figur 2 drei verschiedenen optische Pfade bzw. Referenzkanäle 38, welche unterschiedliche Längen aufweisen, angedeutet, nämlich ein (n-1)-ter Referenzkanal, ein n-ter Referenzkanal und ein (n+1)-ter Referenzkanal. Die optischen Pfade bzw. Referenzkanäle 38 können insbesondere durch optische Fasern realisiert sein, weshalb sie für diesen Fall auch als Faserkanäle bezeichnet werden können. Die optische Weglänge eines Referenzkanals 38 gibt jeweils die axiale Entfernung desjenigen Messabschnitts an, in dem ein Objekt 3 mittels Interferenz erkannt werden kann. Somit ist jedem Referenzkanal 38 genau ein Messabschnitt bzw. Messbereich zugeordnet. Im Beispiel der Figur 2 ist der (n-1)-te Referenzkanal dem Messabschnitt I, der n-te Referenzkanal dem Messabschnitt II und der (n+1)-te Referenzkanal dem Messabschnitt III zugeordnet. Durch das Auswerten eines aufgenommenen Interferenzbildes kann festgestellt werden, welcher oder welche der Referenzkanäle 38 zu einer Interferenz beigetragen hat. Durch die Zuordnung jedes Referenzkanals 38 zu einem Messabschnitt, kann folglich auch derjenige Messabschnitt ermittelt werden, in dem sich ein Objekt 3 zum Zeitpunkt der Messung befindet. Dies liegt insbesondere daran, dass eine Interferenzerscheinung nur dann auftritt, wenn der Weglängenunterschied zwischen einem Referenzstrahl und einem Mess- bzw. Objektstrahl kleiner oder gleich ist als die vorbestimmte (endliche) Kohärenzlänge $I_{coh}$ der für die Messung eingesetzten Lichtquelle.

Wie bereits erwähnt, basiert die Erfindung unter anderem insbesondere auf dem Prinzip der optischen Kohärenztomographie (OCT). Die optische Kohärenztomographie wird herkömmlich zur Messung an organischen Substanzen wie zum Beispiel Haut verwendet. Die Auflösung beträgt dabei wenige $\mu$m. Diese Messtechnik wird häufig am Auge verwendet. Es werden damit Bilder des Augenhintergrunds erstellt, um Krankheiten des Auges diagnostizieren zu können. Bei der optischen Kohärenztomographie wird ein Lichtstrahl in zwei Teile geteilt. Ein Teil des Lichtstrahls wird auf die Probe (z.B. dem Auge) gelenkt und interferiert später mit dem zweiten Teil des Lichtstrahls. Im Rahmen der vorliegenden Erfindung wurde diese Methode modifiziert, so dass damit Objekte erkannt und/oder Abstandsmessungen im Straßenverkehr vorgenommen werden können. Dabei kann eine axiale Auflösung von wenigen Metern erreicht werden. Der entscheidende Vorteil der vorliegenden Erfindung ist, dass der Einfluss von z.B. Nebel und/oder anderen Streuquellen, die sich zwischen dem Detektor der Messvorrichtung und dem Objekt befinden, auf die Messung im Vergleich zu anderen Methoden (z.B. Lidar) geringer ist.

Im Rahmen der vorliegenden Erfindung wurde erkannt, dass sich für Anwendungen im Straßenverkehr insbesondere die sogenannte "Time Domain OCT" eignet, welche in der konventionellen Umsetzung zumeist auf der Verwendung eines auf einem Piezoaktuator montierten Spiegels im Referenzarm basiert, mit welchem der schmalbandige interferenzfähige Bereich, der sich über die Gleichung

$$\Delta z \sim \frac{\lambda^2}{\Delta \lambda}$$

abschätzen lässt, axial durchgestimmt wird. In der obigen Gleichung bezeichnet $\Delta z$ die axiale Auflösung, $\lambda$ die zentrale Wellenlänge, und $\Delta \lambda$, die volle spektrale Bandbreite bei der halben Höhe des Spektrums (FWHM). Somit können unterschiedliche Schichten des volumenstreuenden Mediums adressiert und durch eine interferometrische Signalauswertung von darüber liegenden und darunter liegenden Schichten isoliert werden. Man nennt die OCT daher auch ein optisches Dünnschnittverfahren, da es wie bei der Histologie bei volumenstreuenden Medien (meist biologisches Gewebe) computergestützt digitale axial aufgelöste Dünnschnitte generiert, obwohl die Probe nicht beschädigt/zerschnitten wird, wie es konventionell bei der Herstellung von Dünnschnitten mittels eines Mikrotoms der Fall ist.

Anstatt eines Punktsensors, wie er bei der herkömmlichen OCT verwendet wird, wird im Rahmen der vorliegenden Erfindung vorzugsweise ein Flächensensor verwendet, so dass die laterale Dimension des interferenzfähigen Bereichs in nur einer Aufnahme erfasst werden kann. Dieser Ansatz bietet insbesondere gewisse Vorteile gegenüber der "Frequenz-Domain OCT", die grundsätzlich ebenfalls für die Zerlegung in unterschiedlichen axialen Schnitten bei volumenstreuenden Medien genutzt werden kann. Dabei wird entweder, wie in der herkömmlichen Time Domain OCT, eine meist spektral breitbandige Lichtquelle genutzt, um aus der Aufzeichnung der spektralen Interferenz ("Spectral Domain OCT") entsprechend dem Wiener-Khintchen Thereom die Laufzeit und somit den Abstand zu ermitteln, oder es kommt eine spektral durchstimmbare Lichtquelle zum Einsatz ("Swept Source" OCT), so dass auch hier prinzipiell die Möglichkeit besteht, einen Flächensensor zu nutzen. Jedoch müssten in diesem Fall viele Wellenlängen durchgestimmt werden, um dann daraus die entsprechenden tiefenaufgelösten Ebenen zu berechnen. Die Tiefenauflösung bzw. die axiale Ausdehnung des Messabschnitts ergibt sich aus der spektralen Breitbandigkeit der Lichtquelle ("Spectral Domain OCT") oder aus dem spektral durchgestimmten Wellenlängenbereich ("Swept Source OCT"). Der Messbereich, der axial aufgelöst werden kann, ist von der spektralen Auflösung des Spektrometers ("Spektral Domain OCT") oder der spektralen Breitbandigkeit der einzelnen Wellenlängen ("Swept-Source OCT") abhängig.

Das Messverfahren der sogenannten "Frequency Modulated Continuous Wave" (FMCW) Lidar entspricht im Wesentlichen der Umsetzung der "Swept-Source OCT" für die makroskopische Abstandsmessung von typischerweise bis zu 100 m. Daher muss eine spektral sehr schmalbandige Lichtquelle verwendet werden, die dann auch noch in sehr feinen spektralen Schritten (im sub-Pikometer Bereich) durchgestimmt wird. Darüber hinaus hat der sequenzielle Ansatz der "Frequenz Domain OCT" den Nachteil, dass er nur bei volumenstreuenden Medien mit ortsfesten Streuern eingesetzt werden kann und dass zunächst sehr viele Interferogramme mit unterschiedlicher Wellenlänge aufgenommen werden müssen. Dabei wird in der Rekonstruktion das komplette Messvolumen mit den unterschiedliche Messabschnitten wiedergegeben. Im Rahmen der Erfindung wurde jedoch erkannt, dass dies für eine Anwendung im Straßenverkehr nicht notwendig ist, da meist nur wenige Messabschnitte, nämlich diejenigen, in denen sich zu detektierende Objekte befinden, relevant sind. Insbesondere wurde von den Erfindern erkannt, dass aufgrund des Potentials, die relevante Tiefeninformation in nur einer Aufnahme zu erhalten, die "Time-Domain OCT", insbesondere in Verbindung mit einer Kamera, bei der Applikation dynamisch volumenstreuender Medien mit zeitlich veränderlichen Streuern wesentliche Vorteile gegenüber der "Frequenz Domain OCT" bietet. Des Weiteren wurde von den Erfindern erkannt, dass der Referenzarm nicht, wie herkömmlich, motorisiert verfahren werden kann, um die "Time Domain OCT" für die Abstandmessung im Bereich von 100 m unter realistischem Zeiteinsatz realisieren zu können.

Jedoch wurde im Rahmen der Erfindung erkannt, dass der Referenzstrahl vorzugsweise über eine Scanoptik in einen Faserstecker mit vielen einmodigen ("singlemode") und/oder singlemodigen polarisationserhaltenden Fasern in sehr schneller Abfolge (kHz) eingekoppelt werden kann. Die Faserlängen sind vorzugsweise so aufeinander abgestimmt, dass der optische Längenunterschied (=geometrische Länge * Brechungsindex bei der Laserwellenlänge) zwischen der n-ten und (n-1)-ten Faser sowie zwischen der n-ten und (n+1)-ten Faser jeweils der Kohärenzlänge der verwendeten Lichtquelle entspricht. Auf diese Weise kann der gesamte Messbereich lückenlos abgescannt werden, siehe Figur 2.

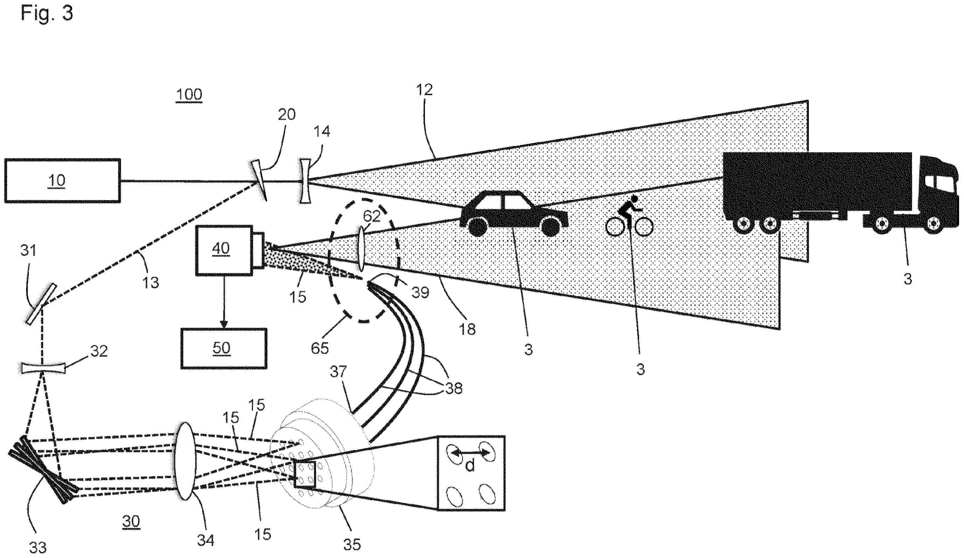

Die **Figur 3** zeigt eine schematische Skizze einer Messvorrichtung 100 gemäß einer bevorzugten Ausführungsform der Erfindung. Mit Hilfe der Messvorrichtung 100 kann zumindest ein Objekt 3 erkannt und dessen Abstand zur Messvorrichtung 100, insbesondere zu einer Bilddatenerfassungseinrichtung 40 der Messvorrichtung 100 ermittelt werden. Die Messvorrichtung 100 weist eine Lichtquelle bzw. einen Laser 10 zum Aussenden von Licht mit einer vorbestimmten Kohärenzlänge auf. Ferner weist die Messvorrichtung 100 einen Strahlteiler 20 zum Aufteilen des von der Lichtquelle 10 ausgesandten Lichts in einen Messstrahl 12 und einen Referenzstrahl 13 auf. Der Messstrahl 12 wir mit Hilfe einer Sammellinse 14 aufgeweitet. Ferner weist die Messvorrichtung 100 eine Referenzstrahltransfereinheit 30 auf, welche ausgelegt ist, den Referenzstrahl 13 in eine Vielzahl von Sub-Referenzstrahlen 15 zu überführen. Mit Hilfe der Bilddatenerfassungseinheit bzw. Kamera 40 können Bilddaten, welche sich durch eine Überlagerung der Sub-Referenzstrahlen 15 mit einem Objektstrahl 18 ergeben, erfasst werden. Insbesondere können mit der Bilddatenerfassungseinheit bzw. Kamera 40 Interferenzbilder und/oder Hologramme aufgenommen werden. Diese können schließlich mit Hilfe einer Auswerteeinheit (50) ausgewertet werden. Der Messstrahl 12 wird von dem zumindest einen Objekt 3 gestreut und/oder reflektiert. Dieser gestreute und/oder reflektierte Messstrahl wird im Rahmen dieser Beschreibung als Objektstrahl 18 bezeichnet.

Die Referenzstrahltransfereinheit 30 umfasst in dem Ausführungsbeispiel der Figur 3 einen Spiegel 31 zum Umlenken des Referenzstrahls 13 sowie eine Streulinse 32, mit welcher der Referenzstrahl 13 aufgeweitet wird. Ferner umfasst die Referenzstrahltransfereinheit 30 eine Scanoptik, welche z.B. einen Galvoscanner 33 und eine Scan-Linse 34 umfasst. Mit dem Galvoscanner 33 kann der Referenzstrahl 13 z.B. in unterschiedlich lange Single Mode Fasern eingekoppelt werden. Genauso gut kann die Scanoptik aber z.B. auch einen MEMS-Spiegel mit Scan-Linse und/oder einen Polygonspiegel umfassen (in der Figur 3 nicht gezeigt). Der von der Streulinse 32 gestreute Referenzstrahl 13 trifft auf die Scanoptik bzw. auf den Galvoscanner 33 und wird schließlich über eine Scan-Linse 34 in eine Vielzahl von Sub-Referenzstrahlen 15 überführt. Die Sub-Referenzstrahlen 15 werden sukzessive in die Öffnungen eines Fasersteckers 35 der Referenzstrahltransfereinheit 30 eingekoppelt. Insbesondere wird jeder der Sub-Referenzstrahlen 15 in eine andere Öffnung des Fasersteckers 35 eingekoppelt. Die Öffnungen des Fasersteckers 35 sind vorzugsweise an den Punkten eines zweidimensionalen hexagonalen Gitters angeordnet. Ein Abstand d zwischen zwei Öffnungen des Fasersteckers 35 kann z.B. ca. 300 $\mu$m betragen (siehe die in der Figur 3 dargestellte Vergrößerung von beispielhaften vier Öffnungen des Fasersteckers). In jeder Öffnung des Fasersteckers 35 ist ein Eingang bzw. Eingangsabschnitt 37 eines optischen Pfads bzw. einer optischen Faser 38 angeordnet. Jeder Sub-Referenzstrahl 15 wird somit in einen separaten optischen Pfad bzw. in eine separate optische Faser 38 eingekoppelt. Die separaten (d.h. räumlich voneinander getrennten) optischen Pfade bzw. Fasern 38 (insbesondere Monomode-Fasern) weisen jeweils eine unterschiedliche Länge (insbesondere eine unterschiedliche optische Länge) auf. Ausgänge bzw. Ausgangsabschnitte 39 der optischen Fasern 38 sind in der Pupillenebene einer Abbildungsoptik 65 (insbesondere einer Linse) angeordnet. Es sei an dieser Stelle angemerkt, dass gemäß einer alternativen Ausführungsform die optischen Pfade 38 z.B. auch als Wellenleiter ("Waveguides") ausgebildet sein können. Mit Hilfe der optischen Pfade 38 werden die Sub-Referenzstrahlen 15 zur Bilddatenerfassungseinheit 40 geführt.

Die aus den optischen Fasern 38 austretenden individuellen Sub-Referenzstrahlen 15, welche jeweils eine unterschiedliche Weglänge zurückgelegt haben, werden schließlich von der Bilddatenerfassungseinheit (Detektionseinheit) bzw. Kamera 40 erfasst. Zudem wird auch der Objektstrahl 18 von der Bilddatenerfassungseinheit 40 mittels einer Linse 62 erfasst/abgebildet. Bei der Linse 62 handelt es sich insbesondere um eine Abbildungslinse im Objektstrahlengang, so dass ein Bild des Objekts auf dem Sensor wiedergegeben wird. Die Sub-Referenzstrahlen 15 und der Objektstrahl 18 werden überlagert und erzeugen ein Interferenzbild und/oder Hologramm, welches von der Bilddatenerfassungseinheit 40 aufgenommen wird.

Mit Hilfe der vorliegenden Erfindung kann insbesondere die Position im Raum von sich bewegenden Objekten oder ortfesten Hindernissen relativ zueinander bestimmt werden, insbesondere durch eine Rekonstruktion mittels digitaler Holographie und unter Verwendung des Prinzips der kohärenten optischen Tomographie.

Durch die Verwendung einer endlichen Anzahl von Referenzstrahlen unterschiedlicher Länge ist es möglich, digitale holografische Bilder aufzunehmen, die verschiedenen Oberflächen von im Raum beobachteten Objekten innerhalb der Grenzen der Kohärenzlänge entsprechen. Der komplette Messbereich kann in interferenzfähige Unterbereiche, wobei angrenzende Unterbereiche einen gewissen axialen Überlapp zueinander besitzen, zerlegt werden. Für das schnelle Abtasten aller Unterbereiche werden schnell schaltbare lichtführende Systeme realisiert, beispielsweise durch Verwendung single-modiger-Fasern unterschiedlicher Länge, die so ausgelegt sind, dass für jede Faser nur ein gewisser Unterbereich interferometrisch adressiert werden kann.

Bei der Auslegung der Faserlängen ist sowohl der optische Lichtweg aufgrund des Brechungsindex der Faser als auch der doppelte Weg, den der für die Interferenz notwendige Objektstrahl zurückgelegt hat, zu beachten. Die Fasern werden vorzugsweise beidseitig in einem gemeinsamen Faserstecker verheiratet. Durch eine Scanner-Optik (Galvoscanner mit Scan-Linse, MEMS-Spiegel mit Scan-Linse, Polygonspiegel, etc.) können die unterschiedlichen Kanäle sehr schnell durchgestimmt werden.

Am anderen Ende des mehrkanaligen Fasersteckers (bzw. alternativ des Waveguide-Systems) ist vorzugsweise eine Linse angeordnet, die vorzugsweise so positioniert ist, dass es zur Kollimation des faseremittierten Lichtes kommt. Aufgrund der unterschiedlichen lateralen Position der Fasern unterschiedlicher Länge im Faserstecker entstehen bei der Kollimation unterschiedliche Winkel zur optischen Achse. Der Faserstecker ist dabei vorzugsweise so zur optischen Achse der Linse lateral dezentriert, dass es für das emittierte Licht aller Fasern zu einer Ausbildung eines Winkels zur optischen Achse kommt. Fasern, die für die Interferenzfähigkeit benachbarter Messbereiche im axialen Scan sorgen, sind im Faserstecker vorzugsweise so angeordnet, dass das emittierte und anschließend vorzugsweise kollimierte Licht beider Strahlen einen maximalen Winkelversatz zueinander aufweist.

Während einer einzigen Kameraaufnahme (Hologramm) werden durch den kHz-fähigen Hochgeschwindigkeits-Scanner alle Fasern bzw. Waveguides, und somit alle interferenzfähigen Weglängen, durchgefahren.

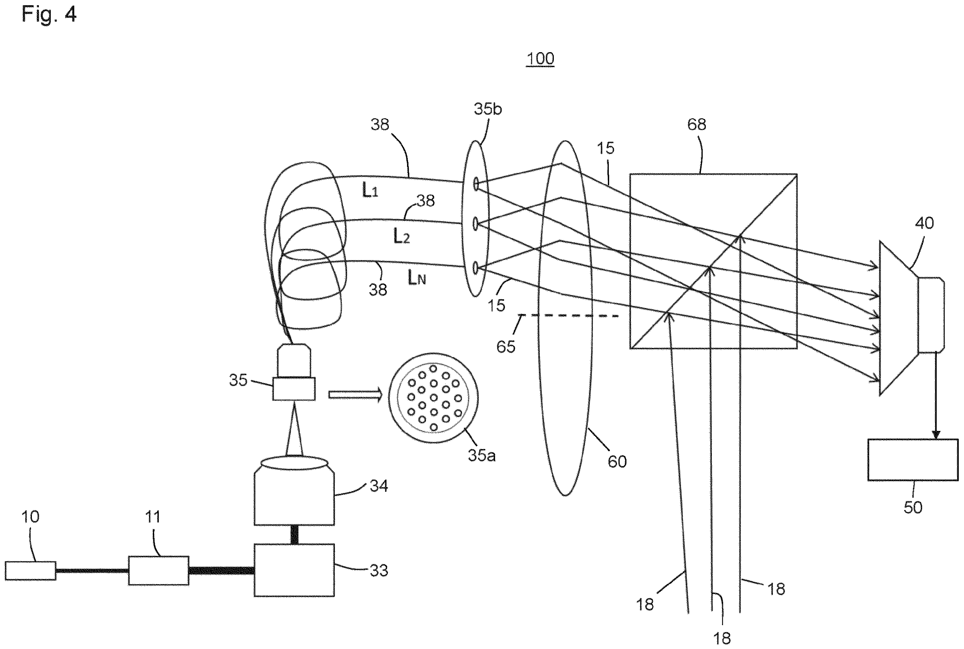

Die **Figur 4** zeigt eine weitere schematische Skizze einer Messvorrichtung 100 gemäß einer bevorzugten Ausführungsform der Erfindung. Kohärentes Licht aus einer Lichtquelle 10 wird durch einen Kollimator 11 gebündelt und gelangt über einen Galvoscanner 33 zu einer Scan-Linse bzw. einem F-Theta Objektiv 34. Das Licht wird schließlich in einem Faserstecker 35 durch Lichtfasern 38, die jeweils eine unterschiedliche Länge aufweisen, geführt. Wie in der Figur 4 dargestellt, sind die optischen Fasern 38 im Faserstecker 35 derart angeordnet, dass in einer Draufsicht auf den Faserstecker 35 bzw. einem Faserstecker-Eingang 35a Eingangsabschnitte der optischen Fasern, in die Sub-Referenzstrahlen 15 eintreten, auf den Punkten eines zweidimensionalen hexagonalen Gitters liegen. Entsprechend sind die optischen Fasern 38 im Faserstecker 35 derart angeordnet, dass in einer Draufsicht auf einen Faserstecker-Ausgang 35b Endabschnitte der optischen Fasern 38, aus denen die Sub-Referenzstrahlen 15 austreten, auf den Punkten eines zweidimensionalen hexagonalen Gitters liegen (in der Figur 4 nicht ersichtlich, da der Einfachheit halber nur drei Ausgangsöffnungen des Fasersteckers 35 gezeichnet sind). Im Beispiel der Figur 4 umfasst der Faserstecker 35 insgesamt 19 Öffnungen, so dass entsprechend auch 19 optische Fasern 38 im Faserstecker 35 angeordnet sind. Wie bereits erwähnt, sind in der Figur 4 beispielhaft nur drei der insgesamt 19 Faserausgängen abgebildet.

Die Messvorrichtung 100 der Figur 4 umfasst ferner eine optische Linse 60, welche derart angeordnet ist, dass die aus dem Faserstecker 35 bzw. aus dem Faserstrecker-Ausgang 35b austretenden Sub-Referenzstrahlen 15 auf die optische Linse 60 treffen und von dieser jeweils unter unterschiedlichen Winkeln bezüglich einer optischen Achse 65 der Linse 60 abgelenkt werden. Bei der Linse 60 handelt es sich insbesondere um eine sogenannte Fourierlinse. Die Faserenden 35b befinden sich im Brennweitenabstand zur Linse 60, so dass die entsprechende laterale Position eines jeden Faserendes in einen geneigten kollimierten Strahlengang nach Durchlaufen der Linse 60 übersetzt wird. Mit Hilfe eines Strahlteilers 68 werden die Sub-Referenzstrahlen einerseits und ein oder mehrere Objektstrahlen 18 andererseits zur Detektionseinheit bzw. Bilddatenerfassungseinheit 40 gelenkt. Die erfassten Bilddaten können sodann über die Auswerteeinheit 50 (insbesondere Computer) ausgewertet werden. Insbesondere können aus der Vielzahl von Sub-Referenzstrahlen 15 diejenigen Sub-Referenzstrahlen ermittelt werden, die mit dem Objektstrahl 18 zu einer Interferenz bzw. einem Interferenzsignal geführt haben. Alternativ oder zusätzlich kann zumindest ein Objektabstand auf Basis eines Interferenzbildes, welches sich aus einer Überlagerung des Objektstrahls 18 mit den Sub-Referenzstrahlen 15 ergibt, ermittelt werden. Vorzugsweise wird hierzu ferner die vorbestimmten Kohärenzlänge der Lichtquelle 10 berücksichtigt, um eine mögliche Abweichung vom tatsächlichen Abstand anzugeben. Alternativ oder zusätzlich wird eine rechnerische Rekonstruktion eines digitalen Holgramms durchgeführt. Alternativ oder zusätzlich können Konturen und/oder Dimensionen des zumindest einen Objekts 3 auf Basis eines digitalen Hologramms, welches sich aus einer Überlagerung des Objektstrahls 18 mit den Sub-Referenzstrahlen 15 ergibt, ermittelt werden.

Durch den in der Figur 4 dargestellten Offset der jeweiligen Lichtfasern 38 zur optischen Achse 65 der Linse 60 sind die Abbildungen jeder Lichtfaser 38 nach einer Fourier-Transformation voneinander getrennt. Da etwa nur 10% der Fasern ein Interferenzsignal aufweisen, kommt es im Fourier-Raum vorteilhafterweise zu keiner oder nur zu einer geringfügigen Überschneidung der jeweiligen Messungen. Ein weiterer Vorteil des Aufbaus liegt insbesondere auch darin, dass in einer einzigen Kameraaufnahme alle Fasern 38 und somit alle interferenzfähigen Wellenlängen gemessen werden können.

Innerhalb einer einzigen Aufnahme mit einer Kameraframerate von typischerweise 20 fps (fps = Bilder pro Sekunde) werden vorzugsweise mit der Scanoptik (z.B. mit dem Galvoscanner 33) alle Fasern 38 durchgefahren. Da das Hauptsignal beispielsweise in der Situation des autonomen Fahrens meist nur von einem Objekt herrührt, welches sich in einem Messabschnitt oder im Übergangsbereich von zwei Messabschnitten befindet, kommt es nur zu einer kohärenten Überlagerung (Ausbildung eines Interferenzmusters) oder im Übergangsbereich von zwei Interferenzmustern innerhalb einer Aufnahme. Im letzteren Fall lassen sich die Informationsinhalte beider Interferenzmuster aufgrund der stark unterschiedlichen Trägerfrequenzwinkel im Fourier-Raum voneinander trennen und somit separat rekonstruieren. Das heißt nur, dass das Licht, welches in den entsprechend angepassten Referenzfasern geführt wird, zur Interferenz beiträgt. Das Licht, welches während der Aufnahme von den anderen, nicht pfadlängenabgestimmten Referenzfasern kommt, trägt nicht zur Interferenz, sondern lediglich zum Gleichanteil bei. Vorteilhaft ist es, wenn die Positionen benachbarter Fasern 38 im Faserstecker weit voneinander entfernt sind, so dass es auf dem Sensor 40 zur Ausbildung stark verstimmter Trägerfrequenzen kommt, die mittels der 2D Fourier-Transformation gefiltert und somit separiert werden können.

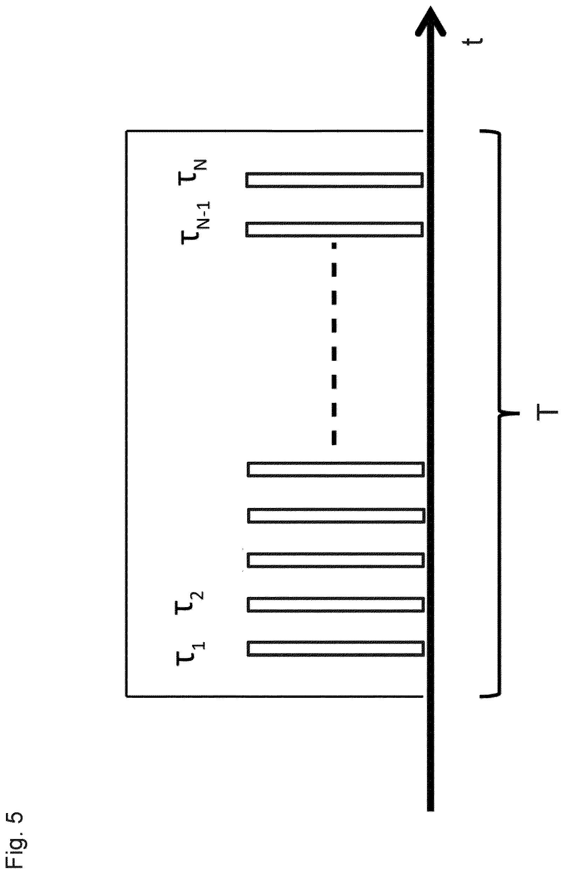

Die **Figur 5** zeigt eine schematische Skizze des zeitlichen Ablaufs der Sub-Referenzstrahlen gemäß einer beispielhaften Ausführungsform der Erfindung. Insbesondere zeigt die Figur 5 eine holografische Einzelaufnahme bei Registrierung aller möglichen im Messbereich befindlichen Objektabstände, die in Subabschnitte entsprechend der Transmission des Lichtes durch die Fasern 1 bis N unterteilt sind, innerhalb eines Kameraframes. Die Dauer einer Bildaufnahme (Kameraframe-Dauer) ist in der Figur 5 mit T bezeichnet. Die in Figur 5 dargestellten Balken stellen Lichtpulse dar, wobei $\tau$ die Beleuchtungszeit durch eine Einzelfaser bezeichnet. Vorzugsweise weisen sämtliche Lichtpulse $\tau_1$, $\tau_2$, ... $\tau_N$ jeweils die gleiche Beleuchtungsdauer auf, d.h. $\tau_1 = \tau_2 = ... = \tau_N$, wobei N die Anzahl von optischen Fasern bezeichnet. Das Licht bzw. die Lichtpulse werden mittels einer Scanoptik nacheinander in die einzelnen Fasern eingekoppelt. Vorzugsweise ist z.B. die Faser 2 kürzer als die Faser 1. Und allgemein ist eine Faser n (mit n > 1) vorzugsweise kürzer als jede der Fasern 1 bis (n-1). Auf diese Weise kommen die Sub-Referenzstrahlen, welche durch die unterschiedlichen Fasern transportiert werden, im Wesentlichen gleichzeitig (oder mit nur einem geringen Zeitversatz) am Detektor an. Zwar kann das Auftreffen der Sub-Referenzstrahlen auf dem Detektor bzw. auf die Bilddatenerfassungseinheit zeitlich leicht versetzt sein, jedoch fällt dieser zeitliche Versatz relativ zur langen Integrationszeit des Kamerasensors (in der Regel mehreren Millisekunden) nicht ins Gewicht.

Eine digitale Rekonstruktion eines aufgenommenen Hologramms erfolgt durch Anwendung einer 2D Fourier-Transformation und somit der Übertragung der registrierten Interferenzen in den räumlichen Frequenzbereich. In diesem Fall ist es im Bereich der Raumfrequenzen möglich, die unterschiedlichen axialen Messabschnitte des Messvolumens, die über die Faserlängen und den entsprechenden Einstrahlwinkel des Referenzstahls interferometrisch kodiert sind, zu trennen.

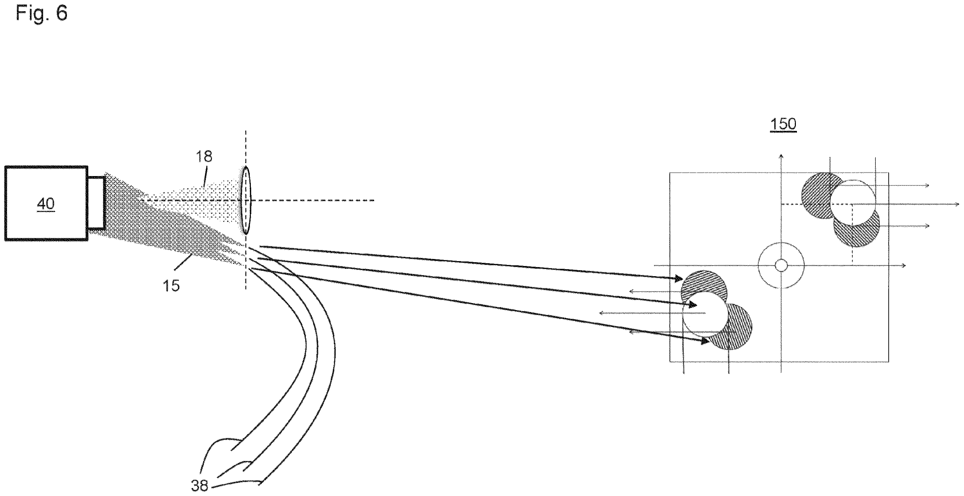

Die **Figur 6** zeigt eine schematische Skizze zur Auswertung von erfassten Bilddaten mittels einer Fourier-Transformation. Wie in der Figur 6 angedeutet, können die einzelnen optischen Pfade 38 im Fourier-Raum 150 (rechter Teil der Figur 6) getrennt voneinander dargestellt werden. Die in der Figur 6 eingezeichneten Pfeile deuten auf die unterschiedlichen Frequenzbereiche bzw. Zeiten hin, die beim Durchscannen der unterschiedlichen Faserlängen anfallen, so dass unterschiedliche axiale Messabschnitte interferometrisch erfasst werden können. Die Position der Endfacette eines optischen Pfads bzw. einer Faser 38 in der Pupillenebene bestimmt die Position der Beugungsordnung im Ortsfrequenzraum. Die Endfacetten können durch a priori Wissen so angeordnet werden, dass innerhalb eines Kameraframes mehrere bzw. alle Kanäle durchgescannt werden und trotzdem eine eindeutige Zuordnung des Objektsignals zu einem bestimmten Kanal möglich ist.

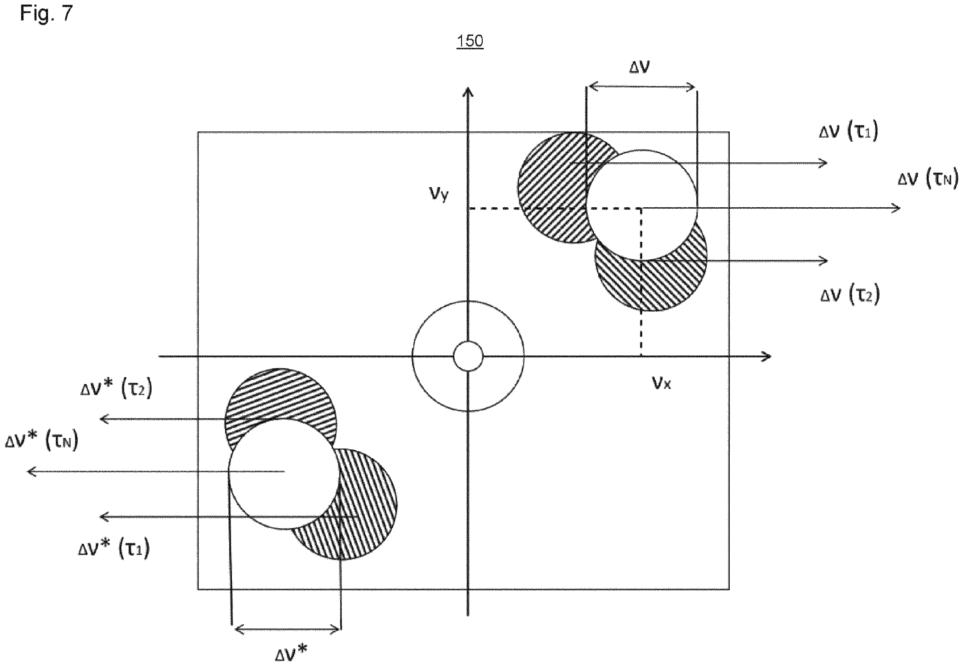

In der **Figur 7** ist der rechte Teil der Figur 6, welcher eine beispielhafte Darstellung eines Interferenzbildes auf Basis von drei Referenzkanälen bzw. Sub-Referenzstrahlen im Fourier-Raum 150 zeigt, vergrößert und mit weiteren Details dargestellt. Insbesondere sind in der Figur 7 beispielhaft die entsprechenden Signale für drei Referenzfasern nach Anwendung einer 2D Fourier-Transformation, die unter unterschiedlichen Winkeln und entsprechenden unterschiedlichen Trägerfrequenzen des resultierenden Interferenzmusters wiedergegeben. Die Koordinatenachsen zeigen die Raumfrequenzen in x und y Richtung an (Einheit: lp/mm). Die Kreise veranschaulichen die für drei Messabschnitte im Fourier-Raum 150 dargestellten Frequenzbereiche, wobei $\Delta\nu$ eine Frequenzbreite darstellt. Das aufgezeichnete Interferenzbild bestehend aus Referenz- und Objektstrahl erzeugt eine sinusförmige Intensitätsverteilung. Die Fourier-Transformation des Sinus resultiert in positiven und negativen Frequenzanteilen, die aber inhaltlich, abgesehen von der Phasenkonjugation, identisch sind. Ein Sternchen bedeutet, dass es sich in diesem Fall um den konjugiert komplexen Frequenzbereich handelt.

Die im Interferenzbild bzw. Hologramm aufgezeichneten Interferenzsignale der unterschiedlichen Fasern sind durch unterschiedliche Interferenzwinkel kodiert, so dass sie nach der 2D Fourier-Transformation aufgrund der unterschiedlichen Raumfrequenzen voneinander getrennt werden können. Unter "Interferenzwinkel" ist insbesondere der Winkel eines aus einer Faser ausgetretenen Lichtstrahls zur optischen Achse gemeint.

Die Frequenzschrittweite lässt sich folgendermaßen berechnen:

$$\delta v = \frac{Z\Delta x}{\lambda f M} \quad,$$

Mit Z der Pixelanzahl entlang einer Dimension, $\Delta x$ der entsprechenden Pixelgröße, $\lambda$ der Wellenlänge, und M der Abbildungsmaßstab des verwendeten optischen Systems zur Generierung des Bildebenen-Hologramms.

Die maximale aufgezeichnete Raumfrequenz berechnet sich dann zu:

$$v_{max} = \frac{Z^2 \Delta x}{2\lambda f M}$$

Der Grenzwinkel $v_{max}$, welcher der maximalen Raumfrequenz entspricht, ist entsprechend dem Nyquist-Kriterium durch die Gleichung:

$$\gamma_{max} = \mathrm{asin}\left(\frac{\lambda}{2\Delta x}\right)$$

gegeben.

Aufgrund des geringen Grenzwinkels von beispielsweise 3° bei typischen Eingangswerten von $\lambda = 0.5\ \mu m$ und $\Delta x = 5\ \mu m$ kann man die Gleichung vereinfachen und in die obere Gleichung integrieren, so dass

$$v_{max} = \frac{Z^2}{\gamma_{max} f M} \quad.$$

Insbesondere wird der Tatbestand ausgenutzt, dass zumindest im Straßenverkehr das dem Messfahrzeug zugewandte Fahrzeug die dahinter liegenden Fahrzeuge, die sich auch im Messbereich befinden könnten, verdeckt, so dass von diesen Fahrzeugen kaum ein signifikanter Beitrag zum Messsignal zu erwarten ist. Somit kann die im Fourierraum 150 in den Raumfrequenzen dargestellte Objektinformation (Ortsbandbreiteprodukt: Produkt aus Ortsauflösung und Feldgröße) bzgl. der Bandbreite optimiert bzw. maximiert werden. Die Feldgröße bezieht sich auf die laterale Ausdehnung des in z begrenzten Messabschnitts. Für die Optimierung im Sinne eines großen Ortsbandbreitprodukts sollte sichergestellt werden, dass die Objektinformation benachbarter Messabschnitte im Fourier-Raum 150 nicht überlappt, sondern am weitesten voneinander entfernt ist. Jedoch kann die theoretisch mögliche Überlappung der Objektinformation weit auseinanderliegender Messbereiche ausgeschlossen werden, so dass der zur Verfügung stehende Frequenzbereich im Fourier-Raum 150 maximiert wird.

Das Applikationsfeld der Erfindung bezieht sich zumeist auf die Erkennung von Objekten (Hindernissen, vorausfahrender Verkehrsteilnehmer, etc.) bei schlechten bzw. erschwerten Sichtbedingungen im Straßenverkehr. Bei den Hindernissen handelt es sich erfahrungsgemäß um große oberflächenstreuende Flächen (z.B. der Karosserie eines vorausfahrenden Autos), so dass der Großteil des Lichts an dieser Fläche reflektiert und/der gestreut wird. Andere Messabschnitte, die noch weiter entfernt liegen, können nicht interferometrisch erfasst werden, da das Licht die Karosserie nicht passieren kann. Messabschnitte, die andererseits vor dem Hindernis liegen, sind von Streupartikeln, wie man sie bei Nebel, Staub Regen, etc., vorfindet, durchsetzt. In diesen Messabschnitten wird wesentlich weniger Licht zur Kamera hin gestreut und/oder reflektiert als es beim Messobjekt der Fall ist. Es kann auch der Fall auftreten, dass das zu detektierende Objekt sich im Überlappungsbereich zweier benachbarter Messabschnitte befindet. Dann würde man aus diesen beiden Messabschnitten ein starkes Interferenzsignal detektieren. Jedoch würden die anderen Abschnitte, in denen sich kein Objekt befindet, keinen wesentlichen Beitrag zum interferometrisch Signal aufweisen. Daher ist die Überlappung der Objektinformation im Fourier-Raum 150 von distanzierten Messabschnitten für dieses Applikationsfeld so gut wie ausgeschlossen. Dies resultiert in eine Rekonstruktion mit verbesserter Abbildungsqualität (verbesserte Ortsauflösung bei gleicher Messfeldgröße).

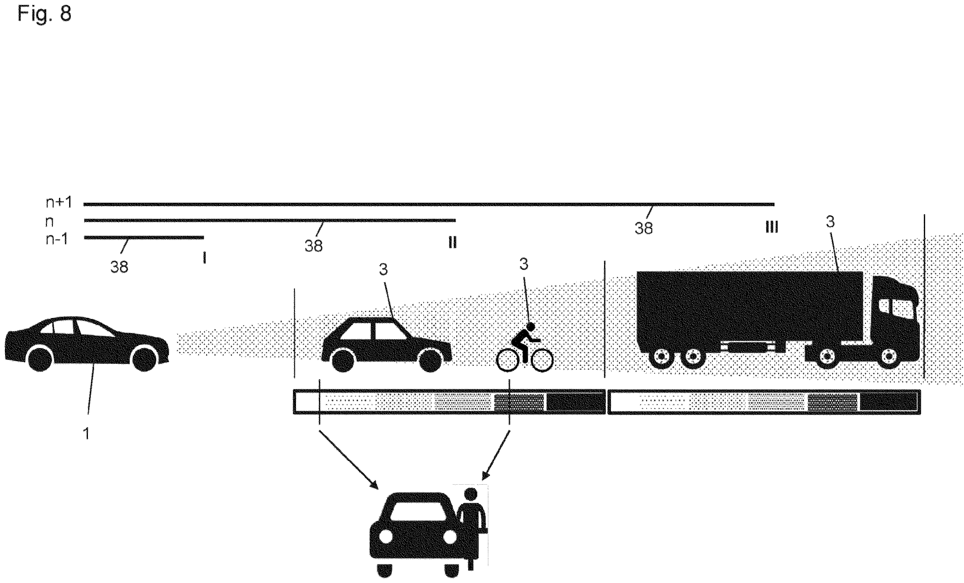

Die **Figur 8** zeigt eine schematische Skizze zur Veranschaulichung eines Prinzips der vorliegenden Erfindung gemäß einem weiteren Beispiel bzw. einer weiteren bevorzugten Ausführungsform. In dieser Ausführungsform werden zwei oder mehrere unterschiedliche Wellenlängen für die Messung verwendet, wodurch eine Feinabstimmung vorgenommen werden kann. Insbesondere kann mittels der Zwei- oder Mehrwellenlängenholografie der Teilmessbereich eines einzelnen Kanals zusätzlich vermessen werden. Das Prinzip basiert auf der Erzeugung einer synthetischen Welle bzw. Wellenlänge, berechnet aus zwei Holgrammen mit leicht unterschiedlichen optischen Frequenzen. Vergleichbar mit der akustischen Schwebung kann eine Welle mit deutlich größerer Wellenlänge (bis in den Meterbereich) erzeugt werden. Die synthetische Wellenlänge wird so gewählt, dass sie der Länge des Teilmessbereichs entspricht. Insbesondere können aus der Phasenlage der synthetischen Welle die Objektentfernungen innerhalb des Teilmessbereichs bestimmt werden. Über die Auswertung der Phaseninformation kann bei der Verwendung von zumindest zwei benachbarten Wellenlängen der durch die Kohärenzlänge bestimmte Messabschnitt noch feiner tiefenaufgelöst und die Kontur des Objektes rekonstruiert werden.

Dabei ist der spektrale Abstand beider Wellenlängen vorzugsweise so zu wählen, dass der sich durch die synthetische Wellenlänge $\lambda_{syn}$ ergebende Messbereich $z_{mess} = \lambda_{syn}/2$ kleiner oder gleich des durch die Kohärenzlänge bedingten Messabschnitts ist. Die synthetische Wellenlänge berechnet sich aus $\lambda_{syn} = (\lambda_1 \cdot \lambda_2)/(|\lambda_1 - \lambda_2|)$ mit $\lambda_1$ und $\lambda_2$ die beiden verwendeten Wellenlängen. Dadurch, dass beide Wellenlängen sehr nah beieinander sind und vorzugsweise aus der gleichen Richtung das Messvolumen beleuchten, ist das Licht beider Wellenlängen ähnlichen Streuereignissen unterworfen. Bei der Subtraktion der holographisch rekonstruierten Phase beider Wellenlängen kann somit der Einfluss der Mehrfachstreuung im Volumen weiterhin reduziert und die Sichtbarkeit verbessert werden. Darüber hinaus kann die Kontur des Hindernisses, an dem der Großteil des Lichts reflektiert und/oder gestreut wird, mit einer Modulation von der Hälfte der synthetischen Wellenlänge rekonstruiert werden.

Beispielsweise wird bei der weitverbreiteten Ausführungsform des Bildebenen-Hologramms zunächst im Fourier-Raum die entsprechende Information gefiltert. Mittels einer inversen Fourier-Transformation gelangt man wieder in die Bildebene, wobei nun die komplexe Information umfassend die Amplitude und Phase zur Verfügung steht. Dieser Schritt wird für beide Wellenlängen durchgeführt. Danach wird die entsprechende Phaseninformation beider Wellenlängen voneinander subtrahiert. Das erzeugte Phasenbild entspricht dem einer synthetischen Wellenlänge, die wesentlich größer ist.

Die "rekonstruierte Phase" der jeweiligen Wellenlänge entsprecht der Höheninformation des Objekts. Bei Höhenstufen geringer als die Hälfte der verwendeten Wellenlänge kann die Höhe des Objekts direkt aus dem Phasenbild einer Einzelwellenlänge ermittelt werden. Bei einer Wellenlänge von z.B. 1064 nm dürfte das Objekt eine Höhenstufe von maximal 532 nm aufweisen. Dies würde dann einen Phasenwert von $2\pi$ entsprechen, wohingegen die Höhenstufe von Null auch einem Phasenwert von Null gleichzusetzen wäre. Durch Verwendung der Mehrwellenlängenmethode lassen sich synthetischen Wellenlänge im Meter-Bereich erzeugen, so dass der Eindeutigkeitsbereich der Höhenstufen entsprechend erweitert werden kann.

Höhenstufen können nur eindeutig bis zu einem maximalen Hub, welcher der Hälfte der synthetischen Wellenlänge entspricht, interpretiert werden. Es ist die Hälfte der synthetischen Wellenlänge, da das Licht in Reflexion den gleichen Weg zwei Mal durchläuft. D.h. ein $2\pi$ Phasensprung entspricht der Hälfte der Wellenlänge.

Die zumindest zwei Wellenlängen werden vorzugsweise zeitgleich aufgezeichnet. Dafür eignet sich unter anderem die sogenannte Trägerfrequenzmethode, welche z.B. in D. Claus et al.: "Snap-shot topography measurement via dual-VCSEL and dual wavelength digital holographic interferometry", Light: Advanced Manufacturing, pp. 403-414, 2021, doi: https://doi.org/10.37188/iam.2021.029, beschrieben ist. Bei der Trägerfrequenzmethode interferiert der Referenzstrahl bzw. ein Sub-Referenzstrahl mit dem Objektstrahl unter einem bestimmten Winkel. Dieser Winkel wird insbesondere so gewählt, dass zum einen die komplette Information des Objektes (größter Winkel des Objektstrahls) erfasst wird und zum anderen das sogenannte Nyquist-Abtast-Theorem eingehalten wird. Ein Interferenzmuster, das unter dieser Bedingung des schrägen Einfalls des Referenzstrahls aufgenommen wird, ermöglicht insbesondere die Rekonstruktion der Phase unter Verwendung einer einzigen Aufnahme. Die Phase kann mittels Extraktion der Objektinformation im Fourier-Raum, die durch die Trägerfrequenz vom Gleichanteil und der komplex konjugierten Objektinformation getrennt dargestellt ist, gefiltert werden. Durch eine inverse Fouriertransformation der Objektinformation, kann die komplexe Objektamplitude rekonstruiert werden.

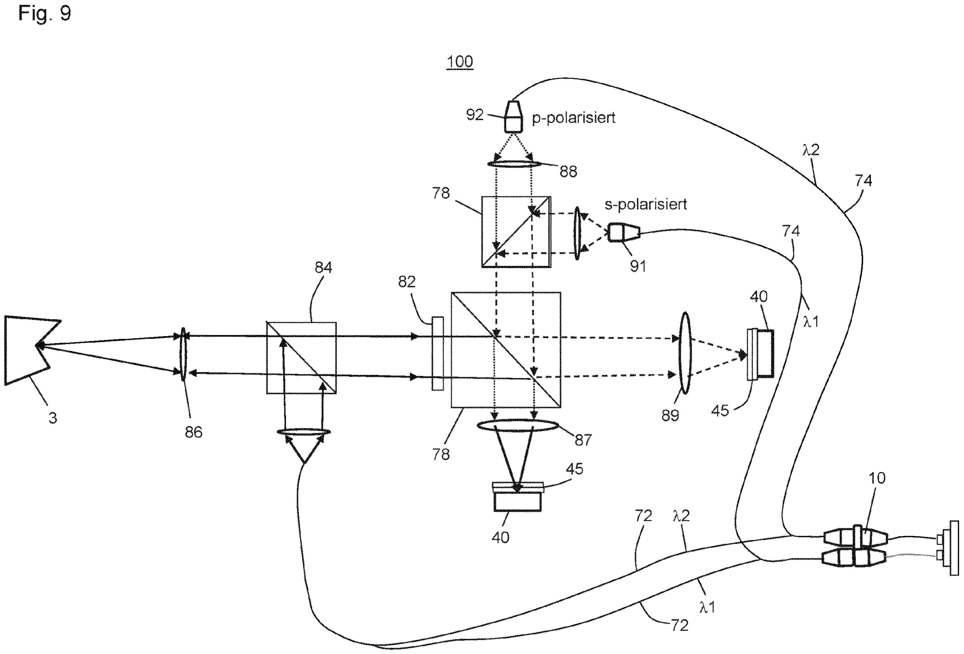

Die **Figur 9** zeigt eine schematische Skizze einer Messvorrichtung 100 gemäß einer weiteren bevorzugten Ausführungsform der Erfindung. In dieser Ausführungsform werden eine Lichtquelle 10, welche zwei unterschiedliche Wellenlängen $\lambda_1$ und $\lambda_2$ aussendet, sowie zwei baugleiche Detektoren 40 verwendet. Dabei wird die Information der zwei Wellenlängen $\lambda_1$ und $\lambda_2$ durch die Verwendung von polarisationserhaltenden Fasern und die Verwendung von Polarisationsstrahlteilerwürfel 78 voneinander getrennt aufgezeichnet. Die Messvorrichtung 100 der Figur 9 umfasst zudem vor jedem Detektor 40 zwei Polarisations-Arrays 45 (insbesondere ein λ/4 bei 45° und 2x2 Polarisations-Array über jeweils 2x2 Pixel angeordnet, so dass bei einem Sensor von 1000x1000 Pixeln für jede Polarisationsrichtung 500x500 Pixel zur Verfügung stehen), einen 45°-Polarisator 82, Linsen 86, 87, 88 und 89, einen s-polarisierten Faserausgang 91 und einen p-polarisierten Faserausgang 92. Die in der Figur 9 unterschiedlich gestrichelten Strahlengänge unterscheiden s- und p-polarisiertes Licht. Insbesondere stellt eine gestrichelte Linie ein s-polarisiertes Licht dar, während eine punktierte Linie ein p-polarisiertes Licht darstellt.

Alternativ oder zusätzlich können beide Wellenlängen auch zeitlich sinusförmig moduliert werden, so dass die wellenlängenzugehörigen Signale dann über eine zeitliche Fourier-Transformation oder der digitalen Lock-in-Methode voneinander trennbar sind und zu jedem einzelnen Zeitpunkt die Phase ermittelt werden kann. Beim digitalen Lock-in wird das Messsignal Ms mit dem Sinus und Cosinus des ursprünglichen direkt vom Laser kommenden vorzugsweise sinusförmig modulierten Laserstrahls der entsprechenden Wellenlänge multipliziert:

$$Phi\_\lambda 1 = arctan(Ms*sin(f\_\lambda 1)/Ms*cos(f\_\lambda 1))$$

Anschließend wird über eine arctan-Funktion der beiden Produkte die Phase bei der jeweiligen Anregungsfrequenz ($f\_\lambda 1$) berechnet. Die anderen Frequenzen werden dabei unterdrückt. Das gleiche Prozedere wird auch für die weiteren bei der Messung beteiligten Wellenlägen durchgeführt. Eine zeitlich sinusförmige Modulation der Wellenlänge kann z.B. durch eine Amplitudenmodulation und/oder durch eine sinusförmige Veränderung der am Laser anliegenden Stromstärke und/oder mittels eines Frequenzgenerators bzw. Mikrokontrollers, etc. Neben der digitalen Lock-in Methode kann auch entlang der zeitlichen Achse die Fourier-Transformation zum Filtern bzw. Extrahieren verwendet werden, um so die unterschiedlichen Modulationsfrequenzen voneinander zu separieren.

Vorzugsweise wird für jede Wellenlänge pixelweise, nach Abzug der Modulationsfrequenz im Fourier-Raum, die jeweilige Phase des Pixels im Objektraum bzw. in der Bildebene berechnet. Danach werden die Wellenlängen korrespondierenden Phasenkarten voneinander subtrahiert, so dass man die Phasenkarte einer synthetischen Wellenlänge erhält. Wenn die Bewegung der Streupartikel zwischen zwei Aufnahmen sehr gering ist, so dass es nicht zu einer Dekorrelation der aufgenommen Streulichtinterferogramme bzw. Hologramme kommt, können auch sequenzielle Methoden verwendet werden. Unter "sequenzielle Methoden" wird verstanden, dass zuerst ein holographisches Bild mit Licht einer ersten Wellenlänge und danach ein oder mehrere Hologramme unter Verwendung von Licht mit weiteren Wellenlängen aufgenommen werden. Auch bei diesen sequenziellen Methoden gilt das oben genannte Prinzip der synthetischen Wellenlänge.

Es gibt viele technische Lösungen, die eine schnelle Aufnahme von zumindest zwei Bildern kurz hintereinander ermöglichen. Beispielsweise gibt es die sogenannten Frametransfer-Sensoren, bei denen der komplette Sensor dupliziert ist, so dass nur die Elektronen von einem Sensor auf den anderen Sensor, welcher lichtabgeschattet ist, übertragen werden. Somit sind kurze Interframezeiten von wenigen Nanosekunden möglich.

Die beiden notwendigen Wellenlängen können z.B. aus zumindest zwei unterschiedlichen Lasern erzeugt werden. Vorteilhaft für die Kompaktheit und die Kosten ist es jedoch, nur eine Lichtquelle zu verwenden. Man könnte beispielsweise mit Hilfe eines akustooptischen Modulators durch eine Frequenzänderung die Änderung der Wellenlänge hervorrufen, so dass die Aufnahme der Hologramme der zumindest zwei Wellenlängen in zeitlich sequenzieller Reihenfolge erfolgen kann. Alternativ oder zusätzlich kann über die Änderung der Stromstärke, die am Laser anliegt, die Wellenlänge verstimmt werden.

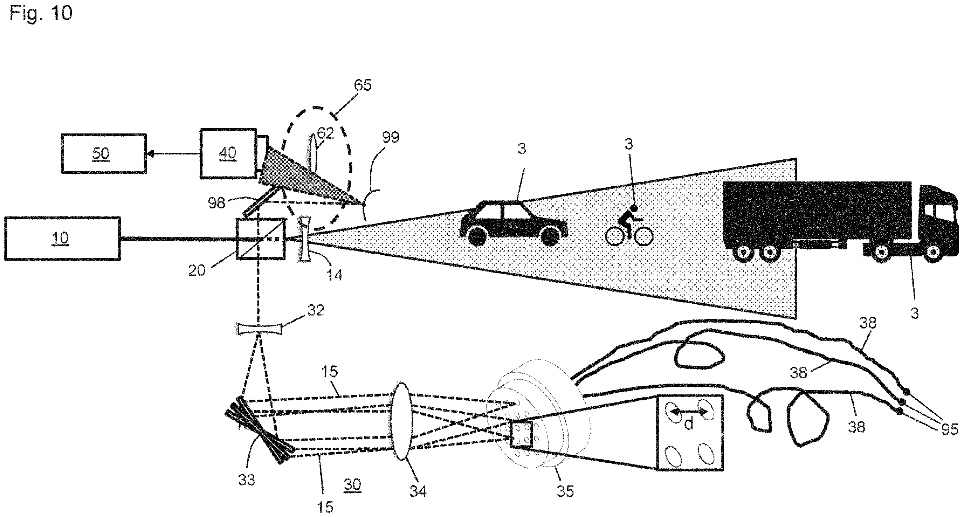

Bei der holografischen Bildregistrierung ist es nicht notwendig, die Kameraaufnahme eines Einzelbildes mit dem Zeitpunkt des Strahlungseingangs in eine einzelne Faser zu synchronisieren, was die Entwicklung des Systems der optischen Signalregistrierung vereinfacht. Es kann jedoch Applikationen geben, bei denen der Großteil des rückgestreuten bzw. rückreflektierten Lichtes nicht nur von einer Oberfläche, sondern von mehreren Oberflächen kommt. In diesem Fall kann es vorteilhaft sein, die unterschiedlichen optischen Weglängen für den Referenzstrahl bzw. für die Sub-Referenzstrahlen sequenziell durchzustimmen. Dabei kann es aus Kompaktheitsgründen vorteilhaft sein, wenn das Ende des mehrkanaligen Fasersteckers verspiegelt wird, so dass das Licht durch die Fasern wieder auf dem gleichen Weg zurückläuft und über die Umlenkoptik, und beispielsweise über den Galvoscanner, für alle optischen Weglängen gleichbleibend auf dieselbe Achse gelenkt wird (siehe Figur 10). Diese Achse sollte vorzugsweise leicht verkippt zur optischen Achse des Detektors bzw. der Bilddatenerfassungseinheit orientiert sein, so dass anhand der räumlichen Trägerfrequenzmethode für jede optische Weglänge nur eine Aufnahme erfolgen muss, um die Phase zu rekonstruieren.

Die **Figur 10** zeigt eine schematische Skizze einer entsprechenden beispielhaften Messvorrichtung 100. Der grundsätzliche Aufbau der Messvorrichtung 100 von Figur 10 ähnelt der in Figur 3 gezeigten Messvorrichtung, weshalb von einer detaillierten Beschreibung an dieser Stelle abgesehen wird. Im Unterschied zur Messvorrichtung der Figur 3 weisen die optischen Pfade bzw. Fasern 38 jedoch verspiegelte Endabschnitte 95 auf. Ferner weist die Messvorrichtung 100 der Figur 10 noch ein Umlenksystem umfassend zwei Spiegel 98 und 99 auf, um die Sub-Referenzstrahlen 15 und den Objektstrahl 18 auf die Bilddatenerfassungseinheit zu lenken. Ein sequenzielles Durchstimmen der unterschiedlichen optischen Weglängen ist, wie in der Figur 10 dargestellt, beispielsweise mittels des Galvoscanners 33 möglich. Dabei durchläuft das Licht auf dem Weg zur den optischen Fasern 38 und von den Faser 38 zurück im Wesentlichen die gleiche Spiegelposition des Galvoscanners 33, da diese sich aufgrund der hohen Lichtgeschwindigkeit selbst bei einer kontinuierlichen Fahrbewegung eines Messfahrzeugs nicht geändert hat.

Darüber hinaus können durch die Hinzunahme der Mehrwellenlängenmethode, die Dank der Trägerfrequenzmethode auch zeitgleich erfolgen kann, die Messabschnitte noch feiner axial abgetastet werden. Bei der Trägerfrequenzmethode wird insbesondere eine Trägerfrequenz aufmoduliert und/oder der Trägerfrequenzwinkel (bzw. Interferenzwinkel) geändert, wodurch die Trennung der Objektinformation für beide Wellenlängen ermöglicht wird. Die räumliche Trägerfrequenzmethode kann im Referenzarm durch Fasern gleicher Länge, die unterschiedliche Wellenlängen transportieren, und durch eine unterschiedliche Positionierung im Faserstecker bzw. Faserhalter umgesetzt werden, so dass sich für jede Wellenlänge unterschiedliche Interferenzwinkel mit der Objektwelle ergeben. Andererseits könnten auch durch die Hinzunahme eines Gitters am Strahlteilwürfel für die verwendeten Wellenlängen unterschiedliche Einfallswinkel auf den Detektor bzw. 2D Sensor generiert werden. Beispielsweise kann ein Gitter mit der Periode G verwendet werden, welches wellenlängenabhängig unterschiedliche Beugungswinkel nach dem Gitter generiert. Der Beugungswinkel $\alpha$

$$\alpha = \arcsin\left(\frac{\lambda}{G}\right)$$

berechnet sich wie folgt: . Weitere Informationen hierzu finden sich z.B. in M. Rostykus, M. Rossi und C. Moser: "Compact lensless subpixel resolution large field", Opt. Letters, Bd. 43, Nr. 8, pp. 1654-1657, 2018, DOI: 10.1364/OL.43.001654.

Die Hinzunahme der Mehrwellenlängenmethode bietet insbesondere den Vorteil, dass die Volumenstreuung durch den Nebel stark unterdrückt wird, da die Streueigenschaften bei Verwendung benachbarter Wellenlängen sehr ähnlich ist (Wellenlängenunterschied geringer als 1 nm). Somit kann man durch Abzug der rekonstruierten Phasenbilder der unterschiedlichen Wellenlängen nicht nur die Sichtbarkeit verbessern, sondern sogar die 3D Kontur des Objektes darstellen. Ein Phasenbild bezeichnet dabei den Phasenanteil der rekonstruierten komplexen Objektamplitude, die durch Prozessschritte der Filterung des aufgenommenen Hologramms im Fourier-Raum und der inversen Fouriertransformation gewonnen wird. Insbesondere werden die Phasenbilder der unterschiedlichen Wellenlängen voneinander subtrahiert, so dass ein Differenzphasenbild entsteht, welches einer wesentlich größeren synthetischen Wellenlänge entspricht. Eine größere Wellenlänge hat den Vorteil, dass der axiale Eindeutigkeitsbereich (z.B. Höhe beim Auftreten von Stufen) erweitert wird. Dies ist insbesondere für Anwendungen, bei denen der interferometrisch erfasste Messabschnitt im Meterbereich liegt, sehr vorteilhaft, um die Kontur eindeutig rekonstruieren zu können.

Prinzipiell kann die Kontur eines detektierten Objekts auch bei der Verwendung von nur einer Wellenlänge rekonstruiert werden, wenn man eine geringere Kohärenzlänge nutzt und entsprechend geringere Längendifferenzen zwischen den Fasern (wenige cm). Dabei müsste man dann die unterschiedlichen Interferenzabschnitte durchscannen, so dass eine längere Aufnahmezeit notwendig wäre als es bei der Zwei-Wellenlängenmethode der Fall ist, da hier nur die Information von zwei unterschiedlichen Wellenlängen aufgezeichnet werden muss. Durch die Trägerfrequenzmethode ist es sogar möglich, die benötigte Information der beiden Wellenlängen interferometrisch in nur einer Aufnahme aufzuzeichnen.

Wenn man den interferometrischen Messabschnitt durch die Hinzunahme von zwei Wellenlängen axial noch feiner erfassen will, so dass die Kontur ersichtlich wird, sollte die entsprechende synthetische Wellenlänge vorzugsweise in etwa der Kohärenzlänge entsprechen. Bei einer Kohärenzlänge von z.B. 3 m wäre bei einer ersten Wellenlänge von z.B. 1064,0000 nm eine zweite Wellenlänge von 1063,9996 nm erforderlich. Dies bedeutet, dass der Wellenlängenversatz nur wenige Pikometer beträgt.

Beispielsweise ist es möglich, pro Faserkanal Licht mit zumindest zwei Wellenlängen in den Faserkanal einzukoppeln. In diesem Fall muss die Integrationszeit entsprechend erhöht werden. Es sind jedoch auch Ausführungsformen möglich, bei denen mit Hilfe eines Beugungsgitters am Strahlteiler, an dem sich die Sub-Referenzstrahlen mit dem Objektstrahl überlagern, das Licht wellenlängenabhängig in unterschiedliche Richtungen auf den Kamerasensor fällt. Auf diese Weise kann die Information der beiden Wellenlängen mittels Fourier-Transformation voneinander getrennt werden.

Alternativ kann pro Wellenlänge jeweils eine separate Faser mit gleicher Länge verwendet werden. Vorzugsweise werden aber optische Komponenten verwendet, welche die unterschiedlichen aus der gleichen Faser kommenden Wellenlängen vorzugsweise in einer Kameraaufnahme in unterschiedliche Winkel ablenken. Ansonsten würde sich die Anzahl an Fasern entsprechend erhöhen.

Die vorliegende Erfindung ermöglicht es insbesondere, die Verfahren der digitalen Holographie und der kohärenten Tomographie miteinander zu verknüpfen, um z.B. den Abstand und/oder die Konturen bzw. Dimensionen von Objekten zu ermitteln, selbst bei schlechten Sichtverhältnissen. Insbesondere ermöglicht die Erfindung eine Rekonstruktion der 3D Form von Objekten kombiniert mit der Wiedergabe des Abstands im Raum bezogen auf die Messvorrichtung, welche sich auch in Bewegung befinden kann. Der Abstand eines Objekts vom Messfahrzeug kann insbesondere auf Basis der OCT bestimmt werden, und zwar dadurch, dass aus der Vielzahl von Referenzkanälen diejenigen Referenzkanäle ermittelt werden, die nach einer FFT zu einem erkennbaren Interferenzsignal bzw. einer erkennbaren Beugungsordnung führen. Aus den Längen der ermittelten Referenzkanäle kann dann auf die Abstände zu sich bewegenden Objekten geschlossen werden. Die Dimensionen von detektierten Objekten können insbesondere auf Basis der digitalen Holographie ermittelt werden, nämlich mittels einer rechnerischen bzw. numerischen Rekonstruktion zumindest eines aufgenommenen digitalen Hologramms. Ferner kann die Kontur eines detektierten Objekts insbesondere durch die Hinzunahme einer zweiten Wellenlänge und der Verwendung der Mehrwellenlängenmethode erfasst werden.

**Bezugszeichenliste**

| | |
|---|---|
| 1 | Fahrzeug mit Messvorrichtung (Messfahrzeug) |
| 3 | Objekt |
| 10 | Laser (Lichtquelle) |
| 11 | Kollimator |
| 12 | Messstrahl |
| 13 | Referenzstrahl |
| 14 | Streulinse |
| 15 | Sub-Referenzstrahl |
| 18 | Objektstrahl |
| 20 | Strahlteiler |
| 30 | Referenzstrahltransfereinheit |
| 31 | Spiegel |
| 32 | Streulinse |
| 33 | Galvoscanner |
| 34 | Objektiv / Scan-Linse / Sammellinse |
| 35 | Faserstecker |
| 35a | Eingang des Faserstecker |
| 35b | Ausgang des Faserstecker |
| 37 | Eingang einer optischen Faser (Eingang eines optischen Pfads) |
| 38 | optische Faser (optischer Pfad / Referenzkanal) |
| 39 | Ausgang einer optischen Faser (Ausgang eines optischen Pfads) |
| 40 | Detektionseinheit / Kamera (Bilddatenerfassungseinheit) |
| 45 | Polarisations-Array |
| 50 | Auswerteeinheit |
| 60 | Linse |
| 65 | optische Achse |
| 68 | Strahlteiler |
| 78 | Polarisationsstrahlteilerwürfel |
| 82 | Polarisator |
| 84 | Strahlteiler |
| 86 | Linse |
| 87 | Linse |
| 88 | Linse |
| 89 | Linse |
| 91 | s-Polarisator |
| 92 | p-Polarisator |
| 95 | verspiegelter Endabschnitt |
| 98 | Spiegel |
| 99 | Spiegel |
| 100 | Messvorrichtung |
| 150 | Fourier-Raum |
| d | Abstand |
| L | Länge |
| N | Anzahl der optischen Pfade |
| τ | Pulsdauer |
| T | Dauer einer Bildaufnahme |

**Patentansprüche**

1. Messvorrichtung (100) zur Detektion zumindest eines Objekts (3) und/oder zur Ermittlung zumindest eines Objektabstands, insbesondere für die Verwendung im Straßenverkehr, umfassend:

   - eine Lichtquelle (10) zum Aussenden von Licht mit einer vorbestimmten Kohärenzlänge;
   - einen Strahlteiler (20) zum Aufteilen des von der Lichtquelle (10) ausgesandten Lichts in einen Messstrahl (12) und einen Referenzstrahl (13);
   - eine Referenzstrahltransfereinheit (30), welche ausgelegt ist, den Referenzstrahl (13) in eine Vielzahl von Sub-Referenzstrahlen (15) zu überführen;
   - eine Bilddatenerfassungseinheit (40) zum Erfassen von Bilddaten, welche sich durch eine Überlagerung der Sub-Referenzstrahlen (15) mit einem Objektstrahl (18) ergeben, wobei der Objektstrahl (18) zumindest einen Teil des Messstrahls (12), welcher von dem zumindest einen Objekt (3) gestreut und/oder reflektiert wurde, umfasst; und
   - eine Auswerteeinheit (50) zum Auswerten der von der Bilddatenerfassungseinheit (40) erfassten Bilddaten;

   wobei die Referenzstrahltransfereinheit (30) eine Vielzahl von räumlich getrennten optischen Pfaden (38) mit jeweils unterschiedlichen optischen Längen umfasst, entlang derer die Sub-Referenzstrahlen (15) zur Bilddatenerfassungseinheit (40) geführt werden.

2. Messvorrichtung (100) nach Anspruch 1, wobei die Referenzstrahltransfereinheit (30) N optische Pfade (38) aufweist, und wobei sich für alle $n \in \{2, 3, 4, ..., N\}$ die optische Länge eines n-ten optischen Pfads von der optischen Länge eines (n-1)-ten optischen Pfads um die vorbestimmte Kohärenzlänge unterscheidet.

3. Messvorrichtung (100) nach Anspruch 1 oder 2, wobei die Vielzahl von optischen Pfaden (38) der Referenzstrahltransfereinheit (30) eine Vielzahl von optischen Fasern und/oder Lichtwellenleitern umfasst.

4. Messvorrichtung (100) nach einem der vorangehenden Ansprüche, wobei:

   a) die Vielzahl von optischen Pfaden (38) eine Vielzahl von optischen Fasern umfasst, und wobei die Referenzstrahltransfereinheit (30) eine Scanoptik (33, 34) umfasst, mit welcher der Referenzstrahl (13) nacheinander in die optischen Fasern eingekoppelt werden kann; und/oder
   b) die Vielzahl von optischen Pfaden (38) eine Vielzahl von Lichtwellenleitern umfasst, und wobei die Referenzstrahltransfereinheit (30) ein Waveguide-System umfasst, mit dem unter Ausnutzung von thermischen Effekten der Referenzstrahl (13) nacheinander in eine Vielzahl von Lichtwellenleitern eingekoppelt werden kann; und/oder
   c) die optischen Pfade (38) jeweils einen verspiegelten Endabschnitt (95) aufweisen.

5. Messvorrichtung (100) nach Anspruch 4 mit den unter a) angeführten Merkmalen, wobei die Referenzstrahltransfereinheit (30) einen mehrkanaligen Faserstecker (35) umfasst, in dem die Vielzahl von optischen Fasern zumindest bereichsweise angeordnet ist.

6. Messvorrichtung (100) nach Anspruch 5, wobei die optischen Fasern im Faserstecker (35) derart angeordnet sind, dass in einer Draufsicht auf den Faserstecker (35) Endabschnitte der optischen Fasern, aus denen die Sub-Referenzstrahlen (15) austreten, auf den Punkten eines zweidimensionalen hexagonalen Gitters liegen.

7. Messvorrichtung (100) nach einem der vorangehenden Ansprüche, ferner umfassend eine optische Linse (60), welche derart angeordnet ist, dass die aus der Referenzstrahltransfereinheit (30) austretenden Sub-Referenzstrahlen (15) auf die optische Linse (60) treffen und von dieser jeweils unter unterschiedlichen Winkeln bezüglich einer optischen Achse (65) der Linse (60) abgelenkt werden.

8. Messvorrichtung (100) nach einem der vorangehenden Ansprüche,

   wobei die vorbestimmte Kohärenzlänge des von der Lichtquelle (10) ausgesandten Lichts in einem Bereich von 1 m bis 5 m liegt; und/oder
   wobei die Lichtquelle (10) ausgelegt ist, Licht mit zwei vorbestimmten unterschiedlichen Wellenlängen auszusenden.

9. Messvorrichtung (100) nach einem der vorangehenden Ansprüche, wobei die Auswerteeinheit (50) ausgelegt ist, von der Bilderfassungseinheit (40) aufgenommene Interferenzbilder und/oder Hologramme, welche sich aus einer Überlagerung des Objektstrahls (18) mit den Sub-Referenzstrahlen (15) ergeben, auszuwerten.

10. Messvorrichtung (100) nach einem der vorangehenden Ansprüche, wobei die Auswerteeinheit (50) ausgelegt ist:

aus der Vielzahl von Sub-Referenzstrahlen (15) denjenigen Sub-Referenzstrahl oder diejenigen Sub-Referenzstrahlen zu ermitteln, der/die mit dem Objektstrahl (18) zu einer Interferenz geführt hat/haben; und/oder zumindest einen Objektabstand auf Basis eines Interferenzbildes, welches sich aus einer Überlagerung des Objektstrahls (18) mit den Sub-Referenzstrahlen (15) ergibt, und vorzugsweise ferner unter Berücksichtigung der vorbestimmten Kohärenzlänge, zu ermitteln; und/oder eine rechnerische Rekonstruktion eines digitalen Holgramms durchzuführen, und/oder eine Kontur des zumindest einen Objekts (3) auf Basis eines digitalen Hologramms, welches sich aus einer Überlagerung des Objektstrahls (18) mit den Sub-Referenzstrahlen (15) ergibt, zu ermitteln.

11. Fahrzeug (1), welches eine Messvorrichtung (100) nach einem der vorangehenden Ansprüche aufweist.

12. Verfahren zur Detektion eines Objektes und/oder zur Ermittlung zumindest eines Objektabstands, insbesondere im Straßenverkehr, umfassend die Schritte:

- Bereitstellen einer Messvorrichtung (100) nach einem der Ansprüche 1 bis 10 und/oder eines Fahrzeugs (1) nach Anspruch 11; und
- Auswerten eines Interferenzbildes und/oder eines digitalen Hologramms, welches sich aus einer Überlagerung des Objektstrahls (18) mit den Sub-Referenzstrahlen (15) ergibt.

13. Verfahren nach Anspruch 12, umfassend die Schritte:

- Durchführen einer Fourier-Transformation, um die von der Bilddatenerfassungseinheit (40) erfassten Bilddaten in den Fourier-Raum (150) überzuführen;
- basierend auf dem Ergebnis der durchgeführten Fourier-Transformation, Ermitteln zumindest eines Sub-Referenzstrahls, welcher mit dem Objektstrahl (18) zu einer destruktiven und/oder konstruktiven Interferenz geführt hat;
- Ermitteln der von dem zumindest einen interferierenden Sub-Referenzstrahl zurückgelegten optischen Weglänge durch Identifizieren des zumindest einen optischen Pfads, entlang derer der zumindest eine interferierende Sub-Referenzstrahl zur Bilddatenerfassungseinheit (40) geführt wurde; und
- Ermitteln zumindest eines Objektabstands auf Basis der zumindest einen ermittelten optischen Weglänge und vorzugsweise ferner auf Basis der vorbestimmten Kohärenzlänge des von der Lichtquelle (10) ausgesandten Lichts.

14. Verfahren nach Anspruch 12 oder 13, umfassend die Schritte:

- Durchführen einer rechnerischen Rekonstruktion eines von der Bilddatenerfassungseinheit (40) aufgenommenen digitalen Holgramms; und
- Ermitteln zumindest einer Dimension und/oder zumindest einer Kontur des zumindest einen Objekts (3) auf Basis der durchgeführten Rekonstruktion.

15. Verfahren nach Anspruch 14, wobei die Lichtquelle (10) der Messvorrichtung (100) ausgelegt ist, Licht mit zumindest zwei vorbestimmten unterschiedlichen Wellenlängen auszusenden, und wobei zum Ermitteln der zumindest einen Dimension und/oder zumindest einen Kontur des zumindest einen Objekts (3) Methoden der Mehrwellenlängenholografie angewendet werden.

Fig. 1 (Stand der Technik)

Fig. 2

Fig. 3

Fig. 4

Fig. 5

$\tau_1$  $\tau_2$  ...  $\tau_{N-1}$  $\tau_N$

T

t

Fig. 6

Fig. 7

EP 4 443 196 A1

Fig. 8

Fig. 9

100

92  p-polarisiert
88
78
s-polarisiert
91
84
82
86
78
87
89
45
40
40
45
40
3
74
λ2
74
λ1
72  λ2
10
72  λ1

EP 4 443 196 A1

Fig. 10

# EP 4 443 196 A1

Europäisches Patentamt
European Patent Office
Office européen des brevets

## EUROPÄISCHER RECHERCHENBERICHT

Nummer der Anmeldung

EP 23 16 6738

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/199027 A1 (LIDWAVE LTD [IL]) 7. Oktober 2021 (2021-10-07) | 1-4,6,7, 9-15 | INV. G01S17/89 |
| Y | * Seite 6, Zeile 7 – Seite 16, Zeile 24 * * Seite 18, Zeile 21 – Seite 66, Zeile 10 * ----- | 4,5,8,10 | G01S7/288 G01S17/08 G01B9/02 |
| Y,D | CLAUS DANIEL ET AL: "Snap-shot topography measurement via dual-VCSEL and dual wavelength digital holographic interferometry", LIGHT: ADVANCED MANUFACTURING, Bd. 2, Nr. 4, 1. Januar 2021 (2021-01-01), Seite 1, XP093070454, ISSN: 2689-9620, DOI: 10.37188/lam.2021.029 * Seiten 3-11 * ----- | 8,10 | |
| Y | WO 2021/127636 A1 (MASSACHUSETTS GEN HOSPITAL [US]) 24. Juni 2021 (2021-06-24) * Absätze [0068] – [0179] * ----- | 4,5 | |

RECHERCHIERTE SACHGEBIETE (IPC)

G01S
G01B

Der vorliegende Recherchenbericht wurde für alle Patentansprüche erstellt

| Recherchenort | Abschlußdatum der Recherche | Prüfer |
|---|---|---|
| München | 7. August 2023 | Köppl, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

30

## ANHANG ZUM EUROPÄISCHEN RECHERCHENBERICHT
## ÜBER DIE EUROPÄISCHE PATENTANMELDUNG NR.

EP 23 16 6738

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-08-2023

| Im Recherchenbericht angeführtes Patentdokument | Datum der Veröffentlichung | Mitglied(er) der Patentfamilie | | Datum der Veröffentlichung |
|---|---|---|---|---|
| WO 2021199027 A1 | 07-10-2021 | EP | 4127775 A1 | 08-02-2023 |
| | | IL | 273779 A | 31-10-2021 |
| | | US | 2023160681 A1 | 25-05-2023 |
| | | WO | 2021199027 A1 | 07-10-2021 |
| WO 2021127636 A1 | 24-06-2021 | AU | 2020405254 A1 | 12-05-2022 |
| | | CA | 3158522 A1 | 24-06-2021 |
| | | CN | 114846292 A | 02-08-2022 |
| | | EP | 4078079 A1 | 26-10-2022 |
| | | JP | 2023508289 A | 02-03-2023 |
| | | WO | 2021127636 A1 | 24-06-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **T. AALTO et al.** Fast thermo-optical switch based on SOI waveguides. *Proceedings of SPIE - The International Society for Optical Engineering,* 2003, 4987

- **D. CLAUS et al.** Snap-shot topography measurement via dual-VCSEL and dual wavelength digital holographic interferometry. *Light: Advanced Manufacturing,* 2021, 403-414, https://doi.org/10.37188/iam.2021.029
- **M. ROSTYKUS ; M. ROSSI ; C. MOSER.** Compact lensless subpixel resolution large field. *Opt. Letters,* 2018, vol. 43 (8), 1654-1657